# EUROPEAN PATENT APPLICATION

(11) **EP 3 780 186 A1**
(43) Date of publication of application: **17.02.2021**
(21) Application number: 19778165.1
(22) Date of filing: 20.03.2019
(51) Int. Cl.: H01M 4/62, H01M 2/16, H01M 4/13, H01M 4/139

(54) **BINDER COMPOSITION FOR SECONDARY CELL, SLURRY COMPOSITION FOR SECONDARY CELL FUNCTIONAL LAYER, SECONDARY CELL MEMBER, SECONDARY CELL, AND METHOD FOR MANUFACTURING SLURRY COMPOSITION FOR SECONDARY CELL NEGATIVE ELECTRODE**

(30) Priority: 27.03.2018 JP 2018060847
(71) Applicant: Zeon Corporation, Tokyo 100-8246 (JP)
(72) Inventor: ADACHI, Yusuke, Tokyo 100-8246 (JP)
(74) Representative: Parchmann, Stefanie
(86) International application number: PCT/JP2019/011892
(87) International publication number: WO 2019/188722

(57) **Abstract**

Disclosed is a binder composition for a secondary battery which comprises an adhesive polymer and a solvent, wherein a viscosity of the binder composition at a solid concentration of 5.0% by mass is 50 mPa·s or more, and a viscosity of a fraction which is obtained by centrifuging the binder composition at a solid concentration of 5.0% by mass and has a light transmittance of 65% or less is 30 mPa·s or more.

## Description

### TECHNICAL FIELD

The present disclosure relates to a binder composition for a secondary battery, a slurry composition for a secondary battery functional layer, a secondary battery member, a secondary battery, and a method of producing a slurry composition for a secondary battery negative electrode.

### BACKGROUND

For their compact size, light weight, high energy-density, and the capability of repetitive charging and discharging, secondary batteries such as lithium ion secondary batteries have been used in a wide range of applications. A secondary battery generally includes secondary battery members (hereinafter also referred to as "battery members") such as electrodes (positive and negative electrodes) and a separator for preventing a short circuit between the positive and negative electrodes by separating them from each other.

Battery members have been used which include a functional layer formed on a substrate. The functional layer comprises an adhesive polymer as a binder and optionally particles added to allow the battery member to exert a desired function (hereinafter such particles are referred to as "functional particles").

Specifically, secondary battery separators have been used which comprise on a separator substrate an adhesive layer containing an adhesive polymer and/or a porous membrane layer containing an adhesive polymer and non-electrically conductive particles as functional particles. Secondary battery electrodes have been used which comprise on a current collector as a substrate an electrode mixed material layer containing an adhesive polymer and electrode active material particles. Also used are secondary battery electrodes which further comprise the aforementioned adhesive layer and/or porous membrane layer formed on an electrode substrate which comprises an electrode mixed material layer on a current collector. These battery members which comprise a functional layer on a substrate are formed for example by applying onto the substrate a slurry composition (slurry composition for a secondary battery functional layer), which is obtained by dispersing an adhesive polymer-containing binder composition and optional functional particles in the presence of a dispersion medium, and drying the slurry composition applied.

Attempts have been made to improve binder compositions for the purpose of further improving the performance of secondary batteries.

For example, PTL 1 discloses a negative electrode binder which comprises core-corona type polymer microparticles wherein a hydrophobic core formed of a structural unit derived from a hydrophobic monomer is surrounded by a hydrophilic corona formed of a structural unit derived from a carboxyl group-containing hydrophilic macromonomer. PTL 1 claims that a negative electrode mixed material layer formed using a negative electrode binder containing specific core-corona type polymer microparticles allows lithium ion secondary batteries to exert good rate characteristics.

### CITATION LIST

### Patent Literature

PTL 1: WO2017/077940

### SUMMARY

### (Technical Problem)

However, when a functional layer such as an electrode mixed material layer is formed on a substrate using the conventional binder compositions, it was not possible to establish a firm adhesion between the functional layer and the substrate. Namely, the conventional binder compositions have had room for improvement in terms of increasing the adhesion between a functional layer and a substrate.

An object of the present disclosure is therefore to provide a binder composition for a secondary battery and a slurry composition for a secondary battery functional layer, which allow for the formation of a functional layer which shows good adhesion to substrates.

Another object of the present disclosure is to provide a secondary battery member in which a functional layer and a substrate are favorably bonded to each other, and a secondary battery which comprises the secondary battery member.

### (Solution to Problem)

The inventor conducted diligent studies with the aim of solving the problem set forth above, and established that a functional layer which shows good adhesion to substrates can be formed using a binder composition which comprises an adhesive polymer and a solvent and has specific viscosity characteristics. The inventor thus completed the present disclosure.

Specifically, the present disclosure aims at advantageously solving the problem set forth above, and the presently disclosed binder composition for a secondary battery comprises an adhesive polymer and a solvent, wherein the viscosity of the binder composition at a solid concentration of 5.0% by mass is 50 mPa·s or more, and the viscosity of a fraction which is obtained by centrifuging the binder composition at a solid concentration of 5.0% by mass and has a light transmittance of 65% or less is 30 mPa·s or more. When a slurry composition is prepared using such a binder composition wherein the viscosity at a solid concentration of 5.0% by mass (hereinafter, this viscosity is also referred to as "5.0% by mass binder viscosity") of the binder composition is 50 mPa·s or more and the viscosity of a fraction which is obtained by centrifuging the binder composition at a solid concentration of 5.0% by mass and has a light transmittance of 65% or less (hereinafter, this viscosity is also referred to as "post-centrifugation fraction viscosity") is 30 mPa·s or more, it is possible to form a functional layer which shows good adhesion to substrates by using the slurry composition. With a battery member comprising the functional layer, it is possible to allow a secondary battery to exert good cycle characteristics. It is also possible to prevent blocking (i.e., increase blocking resistance) of a separator having a porous membrane layer and/or an adhesive layer as functional layer(s) while preventing the separation of an electrode mixed material layer as a functional layer during roll pressing

The "5.0% by mass binder viscosity" and "post-centrifugation fraction viscosity" can be measured by the methods described in Examples herein.

In the presently disclosed binder composition, it is preferred that the adhesive polymer is a composite polymer in which a water-soluble polymer and a particulate polymer are bound to each other. When a binder composition containing a composite polymer in which a water-soluble polymer and a particulate polymer are bound to each other is used as the adhesive polymer, it is possible to allow a secondary battery to exert better cycle characteristics while further improving the adhesion between the functional layer and substrate. It is also possible to further improve the blocking resistance of a separator which comprises a porous membrane layer and/or an adhesive layer while sufficiently preventing the separation of an electrode mixed material layer.

The term "particulate polymer" as used herein refers to a polymer which produces 90% by mass or more of an insoluble matter when 0.5 g of the polymer is dissolved in 100 g of water at 90°C. The term "water-soluble polymer" as used herein refers to a polymer which produces less than 1.0% by mass of an insoluble matter when 0.5 g of the polymer is dissolved in 100 g of water at 90°C.

In the presently disclosed binder composition, it is preferred that the water-soluble polymer comprises 5% by mass or more of an acidic group-containing monomer unit. With a binder composition which comprises a composite polymer in which a water-soluble polymer comprising 5% by mass or more of an acidic group-containing monomer unit and a particulate polymer are bound to each other, it is possible to allow a secondary battery to exert better cycle characteristics while further improving the adhesion between the functional layer and substrate. It is also possible to further improve the blocking resistance of a separator which comprises a porous membrane layer and/or an adhesive layer while further preventing the separation of an electrode mixed material layer during roll pressing. In addition, it is possible to prevent excessive increases in the viscosity of the slurry composition.

The phrase "comprise... monomer unit" as used herein for a polymer means that "a repeating unit derived from a monomer is contained in a polymer obtained using that monomer.

The "proportions (% by mass)" of monomer units contained in a polymer can be measured by nuclear magnetic resonance (NMR) spectroscopy such as ¹H-NMR.

In the presently disclosed binder composition, it is preferred that the water-soluble polymer has a radius of gyration in water of 10 nm or more and 2,000 nm or less. With a binder composition which comprises a composite polymer in which a water-soluble polymer having a radius of gyration in water of 10 nm or more and 2,000 nm or less and a particulate polymer are bound to each other, it is possible to allow a secondary battery to exert better cycle characteristics while further improving the adhesion between the functional layer and substrate. It is also possible to further improve the blocking resistance of a separator which comprises a porous membrane layer and/or an adhesive layer while further preventing the separation of an electrode mixed material layer during roll pressing. In addition, it is possible to prevent excessive increases in the viscosity of the slurry composition.

The "radius of gyration in water" of the water-soluble polymer can be measured by the method described in Examples herein.

In the presently disclosed binder composition, it is preferred that the water-soluble polymer has a weight-average molecular weight of 5.0×10⁴ or more and 3.0×10⁷ or less. With a binder composition which comprises a composite polymer in which a water-soluble polymer having a weight-average molecular weight of 5.0×10⁴ or more and 3.0×10⁷ or less and a particulate polymer are bound to each other, it is possible to allow a secondary battery to exert better cycle characteristics while further improving the adhesion between the functional layer and substrate. It is also possible to further improve the blocking resistance of a separator which comprises a porous membrane layer and/or an adhesive layer while further preventing the separation of an electrode mixed material layer. In addition, it is possible to prevent excessive increases in the viscosity of the slurry composition.

The "weight-average molecular weight" of the water-soluble polymer can be measured by the method described in Examples herein.

In the presently disclosed binder composition, it is preferred that the water-soluble polymer comprises at least one monomer unit selected from the group consisting of an amide group-containing monomer unit, a hydroxyl group-containing monomer unit, a carboxylic acid ester monomer unit, and an alkylene oxide group-containing monomer unit. With a binder composition which comprises a composite polymer in which a water-soluble polymer comprising at least one of the foregoing monomer units and a particulate polymer are bound to each other, it is possible to further improve characteristics of a functional layer and a secondary battery. Specifically, when the water-soluble polymer comprises an amide group-containing monomer unit, it is possible to further improve cycle characteristics of a secondary battery. Further, when at least one of an amide group-containing monomer unit, a hydroxyl group-containing monomer unit, a carboxylic acid ester monomer unit, and an alkylene oxide group-containing monomer unit is included in the water-soluble polymer, it is possible to allow a secondary battery to exert better cycle characteristics while further improving the adhesion between the functional layer and substrate. It is also possible to further improve the blocking resistance of a separator which comprises a porous membrane layer and/or an adhesive layer while further preventing the separation of an electrode mixed material layer.

In the presently disclosed binder composition, it is preferred that the adhesive polymer has a surface acid amount of 0.20 mmol/g or more, and that a value obtained by dividing the surface acid amount of the adhesive polymer by an acid amount in aqueous phase of the adhesive polymer is 1.0 or more. With a binder composition which comprises an adhesive polymer having a surface acid amount of 0.20 mmol/g or more with the surface acid amount-to-acid amount in aqueous phase ratio of 1.0 or more, it is possible to allow a secondary battery to exert better cycle characteristics while further improving the adhesion between the functional layer and substrate. It is also possible to further improve the blocking resistance of a separator which comprises a porous membrane layer and/or an adhesive layer while further preventing the separation of an electrode mixed material layer. In addition, it is possible to prevent excessive increases in the viscosity and foaming of the slurry composition.

The "surface acid amount" of the adhesive polymer herein refers to a surface acid amount per gram of solids of the adhesive polymer. The "acid amount in aqueous phase" of the adhesive polymer herein refers to the amount, per gram of solids of the adhesive polymer, of an acid present in the aqueous phase of an aqueous dispersion containing the adhesive polymer.

The "surface acid amount" and "acid amount in aqueous phase" of the adhesive polymer can be measured by the methods described in Examples herein.

The present disclosure is also aimed at advantageously solving the problem set forth above, and the presently disclosed slurry composition for a secondary battery functional layer comprises any of the binder compositions described above. With a slurry composition prepared using any of the binder compositions described above, it is possible to form a functional layer having good adhesion to substrates. With a battery member comprising such a functional layer, it is possible to allow a secondary battery to exert better cycle characteristics. It is also possible to further improve the blocking resistance of a separator which comprises a porous membrane layer and/or an adhesive layer while further preventing the separation of an electrode mixed material layer during roll pressing.

The presently disclosed slurry composition can further comprise non-electrically conductive particles. With a slurry composition which comprises non-electrically conductive particles as functional particles (i.e., slurry composition for a secondary battery porous membrane layer), it is possible to obtain a porous membrane layer which shows good adhesion to a separator or electrode substrate as a substrate.

The presently disclosed slurry composition can further comprise electrode active material particles. With a slurry composition which comprises electrode active material particles as functional particles (i.e., slurry composition for a secondary battery electrode), it is possible to obtain an electrode mixed material layer which shows good adhesion to a current collector as a substrate.

The present disclosure is also aimed at advantageously solving the problem set forth above, and the presently disclosed secondary battery member comprises a secondary battery functional layer formed using any of the slurry compositions described above, and a substrate. In a battery member which comprises a functional layer formed from any of the slurry compositions described above, the functional layer may be firmly bonded to the substrate.

The present disclosure is also aimed at advantageously solving the problem set forth above, and the presently disclosed secondary battery comprises the secondary battery member described above. A secondary battery which comprises the battery member described above shows good battery characteristics such as good cycle characteristics.

The present disclosure is also aimed at advantageously solving the problem set forth above, and the presently disclosed method of producing a slurry composition for a secondary battery negative electrode comprises mixing negative electrode active material particles with a semi-natural polymer to prepare a mixture solution, and mixing the mixture solution with any of the binder compositions described above to afford a slurry composition for a secondary battery negative electrode. With a slurry composition for a secondary battery negative electrode obtained through the steps described above, it is possible to obtain a negative electrode mixed material layer which shows sufficiently good adhesion to a current collector as a substrate.

Herein, a functional layer containing both an adhesive polymer and electrode active material particles is referred to as an "electrode mixed material layer," a functional layer containing an adhesive polymer and non-electrically conductive particles as a "porous membrane layer," and a functional layer containing an adhesive polymer and is free of electrode active material particles and non-electrically conductive particles as an "adhesive layer."

### (Advantageous Effect)

According to the present disclosure, it is possible to provide a binder composition for a secondary battery and a slurry composition for a secondary battery functional layer, which allow for the formation of a functional layer which shows good adhesion to substrates.

According to the present disclosure, it is also possible to provide a secondary battery member in which a functional layer and a substrate are favorably bonded to each other, and a secondary battery which comprises the secondary battery member.

### BRIEF DESCRIPTION OF THE DRAWINGS

In the accompanying drawings:

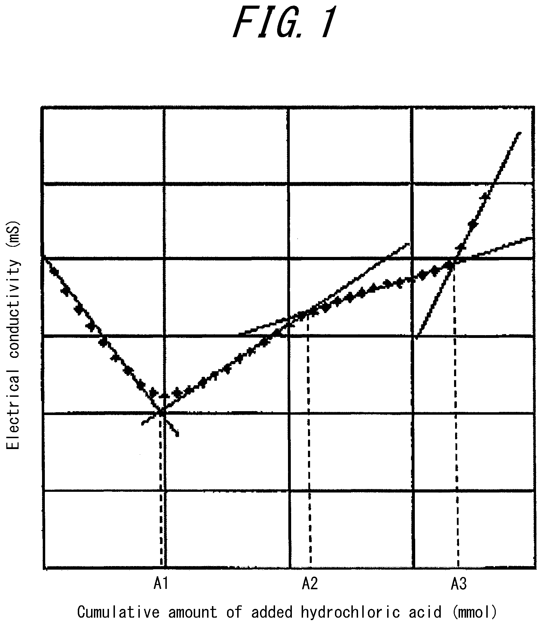

FIG. 1 is a graph showing a curve of electrical conductivity vs. cumulative amount of added hydrochloric acid, prepared when calculating the surface acid amount of an adhesive polymer.

### DETAILED DESCRIPTION

The following provides a detailed description of embodiments of the present disclosure.

The presently disclosed binder composition for a secondary battery is used in secondary battery manufacturing applications and can be used for example in the preparation of the presently disclosed slurry composition for a secondary battery functional layer. The presently disclosed slurry composition can then be used for forming any functional layer (e.g., electrode mixed material layer, porous membrane layer, or adhesive layer) which is responsible for such functions as transferring electrons, reinforcing or bonding in a secondary battery. The presently disclosed secondary battery member comprises a functional layer formed from the presently disclosed slurry composition. The presently disclosed secondary battery comprises the presently disclosed secondary battery member.

### (Binder Composition for Secondary Battery)

The presently disclosed binder composition comprises an adhesive polymer as a binder in a solvent. The binder composition may comprise components other than an adhesive polymer and a solvent (other components).

The presently disclosed binder composition comprising an adhesive polymer and a solvent is a novel binder composition which meets specific viscosity characteristics, i.e., the following conditions (1) and (2):
(1) The viscosity at a solid concentration of 5.0% by mass (5.0% by mass binder viscosity) is 50 mPa·s or more; and
(2) The viscosity of a fraction which is obtained by centrifuging the binder composition at a solid concentration of 5.0% by mass and has a light transmittance of 65% or less (post-centrifugation fraction viscosity) is 30 mPa·s or more.

With a slurry composition prepared using a binder composition whose 5.0% by mass binder viscosity and post-centrifugation fraction viscosity are equal to or greater than the respective specific values, it is possible to form a functional layer which shows good adhesion to substrates.

The mechanism is unclear by which a functional layer can be firmly bonded to a substrate by using a binder composition whose 5.0% by mass binder viscosity and post-centrifugation fraction viscosity are equal to or greater than the respective specific values. However, a possible mechanism is as follows:
First, the fact that the 5.0% by mass binder viscosity of the binder composition is 50 mPa·s or more indicates that solids such as the adhesive polymer (hereinafter also collectively referred to as "adhesive polymer etc.") contained in the binder composition may exhibit high viscosity in solvent. Further, because the presently disclosed binder composition has a post-centrifugation fraction viscosity of 30 mPa·s or more, it can be said that the adhesive polymer etc. may exhibit high viscosity and also are separated by centrifugation to generate clouding, i.e., dispersed as particles of certain size in the binder composition (hereinafter, such components also referred to as a "dispersed component"). The adhesive polymer etc. as a dispersed component which has a high ability of conferring viscosity has poor mobility in solvent. Thus, when a slurry composition prepared using the binder composition is dried on a substrate to form a functional layer thereon, the adhesive polymer etc. are prevented from being localized (i.e., migrated) by thermal convection toward the function layer's surface which is opposite to the substrate. Preventing migration of the adhesive polymer etc. would make it possible to allow the adhesive polymer to be densely present on the surface to be brought in contact with the substrate, so that the adhesion of the function layer to the substrate can be increased.

The presently disclosed binder composition also can bring about effects described below which are considered to be attributable to the aforementioned effect of preventing migration.

First, when a slurry composition prepared using the presently disclosed binder composition is used to form on a current collector as a substrate an electrode mixed material layer as a functional layer, a roll press may be used for pressurization in order to make dense the electrode mixed material layer. In the electrode mixed material layer formed from a slurry composition obtained using the presently disclosed binder composition, due to prevention of migration described above, the adhesive polymer does not become excessively dense on the surface to be in contact with a roll. Thus, it is possible to prevent the electrode mixed material layer from being separated from the current collector even when a roll press has been used for pressurization.

Next, when a separator with a porous membrane and/or an adhesive layer is formed by forming on a separator substrate a porous membrane and/or an adhesive layer as functional layer(s) using a slurry composition prepared using the presently disclosed binder composition, there are cases in which the separator is rolled up or two or more such separators are stacked on top of each other for transportation or storage. In the porous membrane layer and adhesive layer formed from slurry compositions obtained using the presently disclosed binder compositions, due to prevention of migration described above, the adhesive polymer does not become excessively dense on the surface opposite to the substrate. Thus, it is possible to prevent adjacent portions of the separator or adjacent separators from undergoing blocking even when the separator is rolled up or two or more separators are stacked on top of each other

Battery members (electrodes and separator) manufactured using slurry compositions containing the presently disclosed binder composition include a functional layer and a substrate which are firmly bonded to each other, allowing a secondary battery in which they are included to exert good battery characteristics, particularly good cycle characteristics.

The studies conducted by the inventor revealed that the core-corona type polymer microparticles described in PTL 1 cannot provide a binder composition whose post-centrifugation fraction viscosity is equal to or greater than the above-described value for the following possible reason: According to PTL 1, the hydrophilic corona chains of the core-corona type polymer microparticle are formed of a macromonomer obtained by reacting a carboxyl group-containing polymeric compound with a compound having a specific functional group. However, the macromonomer obtained by the reaction described in PTL 1 is sometimes insufficient in terms of introduction of a polymerization activity site. Even if polymerization activity sites have been introduced, there are also several polymerization active sites present on the molecular chain in addition to the terminal. Thus, when preparing core-corona type polymer microparticles, the molecular chains of the macromonomer are bound to the core also at positions other than their terminal, so that the macromonomer cannot be sufficiently spread in aqueous dispersion media. For this reason, it is considered that the core-corona type polymer microparticles described in PTL 1 cannot have a sufficient ability of conferring viscosity, resulting in binder compositions which comprise the microparticles failing to have a post-centrifugation fraction viscosity that is equal to or greater than the above-described value.

### <Viscosity Characteristics of Binder Composition>

### <<5.0% by Mass Binder Viscosity>>

As described above, the presently disclosed binder composition needs to have a viscosity at a solid concentration of 5.0% by mass of 50 mPa·s or more. The viscosity at a solid concentration of 5.0% by mass is preferably 60 mPa·s or more, more preferably 70 mPa·s or more, and even more preferably 80mPa·s or more, but preferably 20,000 mPa·s or less, more preferably 1,500 mPa·s or less, even more preferably 1,000 mPa·s or less, and particularly preferably 500 mPa·s or less. A 5.0% by mass binder viscosity of less than 50 mPa·s results in failure to prevent migration of the adhesive polymer etc., so that adhesion between the functional layer and substrate cannot be ensured and cycle characteristics of a secondary battery deteriorate. Further, not only it is not possible to prevent the separation of an electrode mixed material layer obtained using the binder composition during roll pressing, but the blocking resistance of a separator comprising a porous membrane layer or adhesive layer obtained using the binder composition decreases. On the other hand, a 5.0% by mass binder viscosity of 20,000 mPa·s or less makes it possible to prevent excessive increases in the viscosity of a slurry composition containing the binder composition, allowing the slurry composition to be favorably applied onto the substrate.

The 5.0% by mass binder viscosity of the binder composition can be adjusted by changing the type and/or property of solids such as the adhesive polymer in the binder composition. For example, when the adhesive polymer is a composite polymer in which a water-soluble polymer and a particulate polymer (described later) are bound to each other, the value of 5.0% by mass binder viscosity of the binder composition can be increased by increasing the weight-average molecular weight and/or the radius of gyration in water of the water-soluble polymer.

### <<Post-Centrifugation Fraction Viscosity>>

As described above, as to the presently disclosed binder composition, the viscosity of a fraction which is obtained by centrifuging the binder composition at a solid concentration of 5.0% by mass and has a light transmittance of 65% or less needs to be 30 mPa·s or more. Preferably, this post-centrifugation fraction viscosity is 50 mPa·s or more, and more preferably 80 mPa·s or more, but preferably 30,000 mPa·s or less, more preferably 5,000 mPa·s or less, even more preferably 10,00 mPa·s or less, and particularly preferably 120 mPa·s or less. A post-centrifugation fraction viscosity of less than 30 mPa·s results in failure to prevent migration of the adhesive polymer etc., so that adhesion between the functional layer and substrate cannot be ensured and cycle characteristics of a secondary battery decrease. Further, not only it is not possible to prevent the separation of the electrode mixed material layer obtained using the binder composition during roll pressing, but the blocking resistance of a separator comprising a porous membrane layer or adhesive layer obtained using the binder composition decreases. On the other hand, a post-centrifugation fraction viscosity of 30,000 mPa·s or less makes it possible to prevent excessive increases in the viscosity of a slurry composition containing the binder composition, allowing the slurry composition to be favorably applied onto the substrate.

The post-centrifugation fraction viscosity of the binder composition can be adjusted by changing the type and/or property of solids such as the adhesive polymer (in particular, dispersed component) in the binder composition. For example, when the adhesive polymer is a composite polymer in which a water-soluble polymer and a particulate polymer (described later) are bound to each other, the value of post-centrifugation fraction viscosity of the binder composition can be increased by increasing the weight-average molecular weight and/or the radius of gyration in water of the water-soluble polymer.

### <<Viscosity Ratio>>

The ratio of the viscosity η6 at a rotation speed of 6 rpm to the viscosity η60 at a rotation speed of 60 rpm (η6/η60, hereinafter also referred to as "viscosity ratio") of the presently disclosed binder composition is preferably 1.30 or more, more preferably 1.35 or more, and even more preferably 1.40 or more. When the viscosity ratio of the binder composition is 1.30 or more, it is possible to ensure the thixotropy of a slurry composition containing the binder composition. While slurry compositions with good thixotropy become relatively less viscous upon application onto substrates (under high shear) and therefore are easy to apply, they become relatively more viscous after application (under low shear), so that migration of the adhesive polymer etc. can be prevented. Thus, when the viscosity ratio is 1.30 or more, it is possible to further increase the adhesion between the functional layer and substrate to thereby allow a secondary battery to exert better cycle characteristics while allowing the slurry composition to be favorably applied onto a substrate. Also, it is possible to sufficiently prevent the separation of an electrode mixed material layer during roll pressing and to further improve the blocking resistance of a separator comprising a porous membrane layer or adhesive layer.

The "viscosity ratio" of the binder composition can be measured using the method described in Examples herein.

The viscosity ratio of the binder composition can be adjusted by changing the type and property of solids such as the adhesive polymer in the binder composition. For example, when the adhesive polymer is a composite polymer in which a water-soluble polymer and a particulate polymer (described later) are bound to each other, it is possible to increase the value of the viscosity ratio of the binder composition by increasing the weight-average molecular weight of the water-soluble polymer and/or increasing the surface acid amount of the particulate polymer.

### <Adhesive Polymer>

The adhesive polymer contained in the presently disclosed binder composition is not particularly limited as long as the 5.0% by mass binder viscosity and post-centrifugation fraction viscosity of the binder composition become equal to or greater than the respective specific values. The adhesive polymer is preferably a composite polymer in which a water-soluble polymer and a particulate polymer are bound to each other, for example. When the adhesive polymer is a composite polymer in which a water-soluble polymer and a particulate polymer are physically or chemically bound to each other, it is considered that migration of the adhesive polymer due to thermal convection is sufficiently prevented because the moiety composed of the water-soluble polymer is highly spread in a slurry composition prepared using the binder composition. For this reason, when such a composite polymer is used as the adhesive polymer, it is possible to further increase the adhesion between the functional layer and substrate to thereby allow a secondary battery to exert better cycle characteristics. Also, it is possible to sufficiently prevent the separation of an electrode mixed material layer during roll pressing and to further improve the blocking resistance of a separator comprising a porous membrane layer or adhesive layer.

As the adhesive polymer, one type alone or two or more types may be used in combination at any desired ratio.

### <<Water-Soluble Polymer>>

### [Chemical Composition]

The water-soluble polymer constituting the composite polymer preferably comprises an acidic group-containing monomer unit. The water-soluble polymer can also comprise monomer unit(s) other than the acidic group-containing monomer unit. For example, the water-soluble polymer preferably comprises at least one monomer unit selected from the group consisting of an amide group-containing monomer unit, a hydroxyl group-containing monomer unit, a carboxylic acid ester monomer unit, and an alkylene oxide group-containing monomer unit, as a monomer unit other than the acidic group-containing monomer unit.

### -Acid Group-Containing Monomer Unit-

Examples of acidic group-containing monomers which may form the acidic group-containing monomer unit include carboxylic acid group-containing monomers, sulfo group-containing monomers, and phosphate group-containing monomers.

Examples of carboxylic acid group-containing monomers include monocarboxylic acids and derivatives thereof, dicarboxylic acids and acid anhydride thereof, and derivatives thereof.

Examples of monocarboxylic acids include acrylic acid, methacrylic acid, and crotonic acid.

Examples of monocarboxylic acid derivative include 2-ethyl acrylic acid, isocrotonic acid, α-acetoxy acrylic acid, β-trans-aryloxy acrylic acid, and α-chloro-β-E-methoxy acrylic acid.

Examples of dicarboxylic acids include maleic acid, fumaric acid, and itaconic acid.

Examples of dicarboxylic acid derivatives include methyl maleic acid, dimethyl maleic acid, phenyl maleic acid, chloromaleic acid, dichloromaleic acid, and fluoromaleic acid.

Examples of acid anhydrides of dicarboxylic acids include maleic anhydride, acrylic anhydride, methyl maleic anhydride, and dimethyl maleic anhydride.

Also usable as carboxylic acid group-containing monomers include acid anhydrides which produce a carboxy group by hydrolysis.

Examples of sulfo group-containing monomers include styrene sulfonic acid, vinyl sulfonic acid, methyl vinyl sulfonic acid, (meth)allyl sulfonic acid, 3-allyloxy-2-hydroxypropane sulfonic acid, and 2-acrylamide-2-methyl propane sulfonic acid.

The term "(meth)allyl" as used herein refers to allyl and/or methallyl.

Examples of phosphate group-containing monomers include 2-(meth)acryloyloxy ethyl phosphate, methyl-2-(meth)acryloyloxyethyl phosphate, and ethyl-(meth)acryloyloxyethyl phosphate

The term "(meth)acryloyl" as used herein refers to acryloyl and/or methacryloyl.

Preferred from the viewpoint of further improving the adhesion between the functional layer and substrate are carboxylic acid group-containing monomers, with (meth)acryl acid being more preferred, and acrylic acid being even more preferred. As the acidic group-containing monomer, one type alone or two or more types may be used in combination at any desired ratio.

The term "(meth)acryl" as used herein refers to acryl and/or methacryl.

It is defined herein that monomers included in acidic group-containing monomers are not included in amide group-containing monomers, hydroxyl group containing monomers, carboxylic acid ester monomers, and alkylene oxide group-containing monomers, which are described later.

The proportion of the acidic group-containing monomer unit contained in the water-soluble polymer is preferably 5% by mass or more based on 100% by mass of the total monomer units (total repeating units) of the water-soluble polymer, more preferably 10% by mass or more, and even more preferably 15% by mass or more, but preferably 60% by mass or less, more preferably 50% by mass or less, and even more preferably 40% by mass or less. When the proportion of the acidic group-containing monomer unit of the water-soluble polymer is 5% by mass or more, it is possible to further increase the adhesion between the functional layer and substrate to thereby allow a secondary battery to exert better cycle characteristics. Also, it is possible to sufficiently prevent the separation of an electrode mixed material layer during roll pressing and to further improve the blocking resistance of a separator comprising a porous membrane layer or adhesive layer. On the other hand, when the proportion of the acidic group-containing monomer unit of the water-soluble polymer is 60% by mass or less, it is possible to prevent excessive increases in the viscosity of a slurry composition containing the binder composition, allowing the slurry composition to be favorably applied onto a substrate.

### -Amide Group-Containing Monomer Unit-

Amide group-containing monomers which may form the amide group-containing monomer unit include acrylamide, methacrylamide, dimethylacrylamide, diethylacrylamide, diacetone acrylamide, hydroxyethyl acrylamide, hydroxymethylacrylamide, hydroxypropylacrylamide, and hydroxybutylacrylamide. One type alone or two or more types may be used in combination at any desired ratio. Preferred from the viewpoint of further increasing the adhesion between the functional layer and substrate is (meth)acrylamide, with acrylamide being more preferred,

It is defined herein that monomers corresponding to amide group-containing monomers are not included in hydroxyl group-containing monomers.

The proportion of the amide group-containing monomer unit contained in the water-soluble polymer is preferably 30% by mass or more based on 100% by mass of the total monomer units (total repeating units) of the water-soluble polymer, more preferably 43% by mass or more, and even more preferably 55% by mass or more, but preferably 90% by mass or less, and more preferably 80% by mass or less. When the proportion of the amide group-containing monomer unit of the water-soluble polymer is 30% by mass or more, it is possible to further improve cycle characteristics of a secondary battery. On the other hand, when the proportion of the amide group-containing monomer unit of the water-soluble polymer is 90% by mass or less, it is possible to sufficiently prevent the separation of an electrode mixed material layer during roll pressing.

### -Hydroxyl Group-Containing Monomer Unit-

Hydroxyl group-containing monomers which may form the hydroxyl group-containing monomer unit include hydroxymethyl acrylate, hydroxyethyl acrylate, hydroxypropyl acrylate, hydroxybutyl acrylate, hydroxymethyl methacrylate, hydroxyethyl methacrylate, hydroxypropyl methacrylate, and hydroxybutyl methacrylate. One type alone or two or more types may be used in combination at any desired ratio. Preferred is hydroxyethyl acrylate.

The proportion of the hydroxyl group-containing monomer unit contained in the water-soluble polymer is 0% by mass or more based on 100% by mass of the total monomer units (total repeating units) of the water-soluble polymer, and preferably 0.5% by mass or more, but preferably 15% by mass or less, and more preferably 10% by mass or less. When the proportion of the hydroxyl group-containing monomer unit of the water-soluble polymer is 0.5% by mass or more, it is possible to further increase the adhesion between the functional layer and substrate to thereby allow a secondary battery to exert better cycle characteristics. Also, it is possible to sufficiently prevent the separation of an electrode mixed material layer during roll pressing and to further improve the blocking resistance of a separator comprising a porous membrane layer or adhesive layer. On the other hand, when the proportion of the hydroxyl group-containing monomer unit of the water-soluble polymer is 15% by mass or less, it is possible to prevent foaming of a slurry composition prepared using the binder composition.

### -Carboxylic Acid Ester Monomer Unit-

Carboxylic acid ester monomers which may form the carboxylic acid ester monomer unit include (meth)acrylic acid ester monomers.

Examples of (meth)acrylic acid ester monomers include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, and octyl acrylate such as 2-ethylhexyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, and octyl methacrylate such as 2-ethylhexyl methacrylate. One type alone or two or more types may be used in combination at any desired ratio. Preferred is n-butyl acrylate.

The proportion of the carboxylic acid ester monomer unit contained in the water-soluble polymer is 0% by mass or more based on 100% by mass of the total monomer units (total repeating units) of the water-soluble polymer, preferably 0.5% by mass or more, but preferably 15% by mass or less, more preferably 10% by mass or less, and even more preferably 6% by mass or less. When the proportion of the carboxylic acid ester monomer unit of the water-soluble polymer is 0.5% by mass or more, it is possible to further increase the adhesion between the functional layer and substrate to thereby allow a secondary battery to exert better cycle characteristics. Also, it is possible to sufficiently prevent the separation of an electrode mixed material layer during roll pressing and to further improve the blocking resistance of a separator comprising a porous membrane layer or adhesive layer. On the other hand, when the proportion of the carboxylic acid ester monomer unit of the water-soluble polymer is 15% by mass or less, it is possible to prevent foaming of a slurry composition prepared using the binder composition.

### -Alkylene Oxide Group-Containing Monomer Unit-

Alkylene oxide group-containing monomers which may form the alkylene oxide group-containing monomer unit include (meth)acrylic acid ester monomers having a chain ether structure, and (meth)acrylic acid ester monomers having a cyclic ether structure.

Examples of (meth)acrylic acid ester monomers having a chain ether structure include methoxyethyl acrylate, methoxydiethylene glycol (meth)acrylate, methoxy triethylene glycol (meth)acrylate, 2-ethylhexyloxydiethylene glycol (meth)acrylate, methoxypolyethylene glycol (meth)acrylate, 2-ethoxyethyl (meth)acrylate, ethoxy diethylene glycol (meth)acrylate, ethoxytriethylene glycol (meth)acrylate, methoxypropylene glycol (meth)acrylate, methoxy dipropylene glycol (meth)acrylate, methoxy triethylene glycol (meth)acrylate, methoxytetraethylene glycol (meth)acrylate, ethoxydipropylene glycol (meth)acrylate, ethoxytripropylene glycol (meth)acrylate, phenoxyethyl (meth)acrylate, phenoxydiethylene glycol (meth)acrylate, and phenoxypolyethylene glycol (meth)acrylate.

Examples of (meth)acrylic acid ester monomers having a cyclic ether structure include glycidyl (meth)acrylate, tetrahydrofurfuryl (meth)acrylate, caprolactone-modified tetrahydrofurfuryl (meth)acrylate, (3-oxetanyl)methyl (meth)acrylate, (3-methyl-3-oxetanyl)methyl (meth)acrylate, (3-ethyl-3-oxetanyl)methyl (meth)acrylate, (3-butyl-3-oxetanyl)methyl (meth)acrylate, (3-hexyl-3-oxetanyl)methyl (meth)acrylate, (3-ethyl-oxetane-3-yloxy)ethyl (meth)acrylate, (3-ethyl-oxetane-3-yloxy)butyl (meth)acrylate, and 3,4-epoxycyclohexylmethyl(meth)acrylate.

Preferred are (meth)acrylic acid ester monomers having a chain ether structure, with methoxyethyl acrylate being more preferred.

As the (meth)acrylic acid ester monomer, one type alone or two or more types may be used in combination at any desired ratio.

It is defined herein that monomers corresponding to alkylene oxide group-containing monomers are not included in carboxylic acid ester monomers.

The proportion of the alkylene oxide group-containing monomer unit in the water-soluble polymer is 0% by mass or more based on 100% by mass of the total monomer units (total repeating units) of the water-soluble polymer, preferably 0.5% by mass or more, but preferably 15% by mass or less, more preferably 10% by mass or less, and even more preferably 6% by mass or less. When the proportion of the alkylene oxide group-containing monomer unit of the water-soluble polymer is 0.5% by mass or more, it is possible to further increase the adhesion between the functional layer and substrate to thereby allow a secondary battery to exert better cycle characteristics. Also, it is possible to sufficiently prevent the separation of an electrode mixed material layer during roll pressing and to further improve the blocking resistance of a separator comprising a porous membrane layer or adhesive layer. On the other hand, when the proportion of the alkylene oxide group-containing monomer unit of the water-soluble polymer is 15% by mass or less, it is possible to prevent foaming of a slurry composition prepared using the binder composition.

### [Radius of Gyration in Water]

The water-soluble polymer preferably has a radius of gyration in water of 10 nm or more, more preferably 20 nm or more, and even more preferably 30 nm or more, but preferably 2,000 nm or less, more preferably 1,500 nm or less, and even more preferably 500 nm or less. When the radius of gyration in water of the water-soluble polymer is 10 nm or more, it is possible to further increase the adhesion between the functional layer and substrate to thereby allow a secondary battery to exert better cycle characteristics. Also, it is possible to sufficiently prevent the separation of an electrode mixed material layer during roll pressing and to further improve the blocking resistance of a separator comprising a porous membrane layer or adhesive layer. On the other hand, when the radius of gyration in water of the water-soluble polymer is 2,000 nm or less, it is possible to prevent excessive increases in the viscosity and foaming of a slurry composition prepared using the binder composition, allowing the slurry composition to be favorably applied onto a substrate.

### [Weight-Average Molecular Weight]

The water-soluble polymer preferably has a weight-average molecular weight of 5.0×10⁴ or more, more preferably 1.0×10⁵ or more, and even more preferably 3.0×10⁵ or more, but preferably 3.0×10⁷ or less, more preferably 2.0×10⁷ or less, and even more preferably 1.0×10⁷ or less. When the weight-average molecular weight of the water-soluble polymer is 5.0×10⁴ or more, it is possible to further increase the adhesion between the functional layer and substrate to thereby allow a secondary battery to exert better cycle characteristics. Also, it is possible to sufficiently prevent the separation of an electrode mixed material layer during roll pressing and to further improve the blocking resistance of a separator comprising a porous membrane layer or adhesive layer. On the other hand, when the weight-average molecular weight of the water-soluble polymer is 3.0×10⁷ or less, it is possible to prevent excessive increases in the viscosity and foaming of a slurry composition prepared using the binder composition, allowing the slurry composition to be favorably applied onto a substrate.

### <<Particulate Polymer>>

The particulate polymer which binds with the water-soluble polymer described above to form a composite polymer is not particularly limited, and particulate polymers known in the art can be used. Examples of particulate polymers known in the art include conjugated diene polymers and acrylic polymers.

A conjugated diene polymer refers to a polymer containing a conjugated diene monomer unit. Examples of conjugated diene polymers include polymers containing an aromatic vinyl monomer unit and an aliphatic conjugated diene monomer unit, such as styrene-butadiene polymers (SBR, polymers containing at least a styrene unit and a 1,3-butadiene unit) and styrene-isoprene-styrene (SIS) block copolymers; polymers consisting solely of an aliphatic conjugated diene monomer unit, such as polybutadiene; and acrylic rubbers (NBR) (polymers containing at least an acrylonitrile unit and a 1,3-butadiene unit).

An acrylic polymer refers to a polymer which contains a (meth)acrylic acid ester monomer unit. Examples of acrylic polymers include polymers which contain at least a (meth)acrylic acid ester monomer unit and an acidic group-containing monomer unit.

Preferred are styrene-butadiene polymers from the viewpoint of further improving the adhesion between the functional layer and substrate. As the particulate polymer, one type alone or two or more types may be used in combination at any desired ratio.

### <Proportions of Water-Soluble Polymer and Particulate Polymer>

The proportions of the water-soluble polymer and the particulate polymer constituting the composite polymer are not particularly limited. However, it is preferred that the proportion of the water-soluble polymer in the total amount of the water-soluble polymer and the particulate polymer is 30% by mass or more, and more preferably 40% by mass or more, but preferably 70% by mass or less, and more preferably 60% by mass or less. When the proportion of the water-soluble polymer in the total amount of the water-soluble polymer and the particulate polymer in the composite polymer as the adhesive polymer falls within the range described above, it is possible to further increase the adhesion between the functional layer and substrate to thereby allow a secondary battery to exert better cycle characteristics. Also, it is possible to sufficiently prevent the separation of an electrode mixed material layer during roll pressing and to further improve the blocking resistance of a separator comprising a porous membrane layer or adhesive layer.

### <<Method of Preparing Adhesive Polymer>>

Methods of preparing the adhesive polymer are not particularly limited. For example, when the adhesive polymer is the composite polymer described above, the adhesive polymer can be prepared by polymerizing a monomer composition containing monomers for a water-soluble polymer in a water-containing reaction solvent to afford an aqueous solution containing a water-soluble polymer, adding into the aqueous solution a monomer composition containing monomers for a particulate polymer without deactivating the polymerization active site of the water-soluble polymer, and carrying out polymerization of the monomer composition for a particulate polymer. By sequentially carrying out the preparation of a water-soluble polymer and the preparation of a particulate polymer in the manner described above, the polymerization active site remained on the water-soluble polymer initiates polymerization of the monomers for a particulate polymer, whereby a composite polymer can be obtained in which a water-soluble polymer and a particulate polymer are integrated by chemical bonding

The polymerization method used to prepare the water-soluble polymer and the particulate polymer may be any of solution polymerization, suspension polymerization, bulk polymerization, emulsion polymerization, and other polymerization methods. Moreover, the polymerization reaction may be addition polymerization such as ionic polymerization, radical polymerization, or living radical polymerization. Polymerization solvents, emulsifiers, dispersants, polymerization initiators, chain transfer agents and other components which may be used for polymerization can be those commonly used in the art and can be used in amounts common in the art.

### <Surface Acid Amount and Acid Amount in Aqueous Phase>

The surface acid amount of the adhesive polymer is preferably 0.20 mmol/g or more, more preferably 0.70 mmol/g or more, and even more preferably 0.90 mmol/g or more. When the adhesive polymer has a surface acid amount of 0.20 mmol/g or more, it is possible to further increase the adhesion between the functional layer and substrate to thereby allow a secondary battery to exert better cycle characteristics. Also, it is possible to sufficiently prevent the separation of an electrode mixed material layer during roll pressing and to further improve the blocking resistance of a separator comprising a porous membrane layer or adhesive layer. Further, it is possible to prevent excessive increases in the viscosity of a slurry composition containing the binder composition, allowing the slurry composition to be favorably applied onto a substrate.

The upper limit of the surface acid amount of the adhesive polymer is not particularly limited. However, the surface acid amount is, for example, 5.0 mmol/g or less.

The surface acid amount of the adhesive polymer can be adjusted by changing the types and amounts of monomers used to produce a polymer used as the adhesive polymer. Specifically, for example, the surface acid amount can be increased by increasing the amount of the acidic group-containing monomer used. In addition, for example, when the adhesive polymer is the composite polymer described above, it is also possible to adjust the surface acid amount by changing the proportion of the water-soluble polymer in the total amount of the water-soluble polymer and the particulate polymer in the composite polymer.

The value obtained by dividing the surface acid amount of the adhesive polymer by the acid amount in aqueous phase of the adhesive polymer is preferably 1.0 or more, more preferably 1.5 or more, and even more preferably 2.0 or more. When the value is 1.0 or more, it is possible to further increase the adhesion between the functional layer and substrate to thereby allow a secondary battery to exert better cycle characteristics. Also, it is possible to sufficiently prevent the separation of an electrode mixed material layer during roll pressing and to further improve the blocking resistance of a separator comprising a porous membrane layer or adhesive layer. Further, it is possible to prevent foaming of a slurry composition containing the binder composition, allowing the slurry composition to be favorably applied onto a substrate.

The upper limit of the value obtained by dividing the surface acid amount of the adhesive polymer by the acid amount in aqueous phase of the adhesive polymer is not particularly limited. However, the value is, for example, 10 or less.

The value obtained by dividing the surface acid amount of the adhesive polymer by the acid amount in aqueous phase of the adhesive polymer can be adjusted by adjusting the surface acid amount by the method described above. The value can also be adjusted by adjusting the acid amount in the aqueous phase. For example, when preparing the adhesive polymer, the acid amount in aqueous phase can be reduced by reducing, by methods known in the art, the amount of a polymer containing an acidic group-containing monomer unit that is liberated in the aqueous phase.

### <<Proportion>>

In the presently disclosed binder composition, the proportion of the adhesive polymer (in particular, the complex polymer described above) in total solids is preferably 95% by mass or more, more preferably 96% by mass or more, even more preferably 98% by mass or more, and is 100% by mass or less.

### <Solvent>

Examples of solvents to be included in the binder composition include hydrophilic solvents. Examples of hydrophilic solvents include water; ketones such as diacetone alcohol, and γ-butyrolactone; alcohols such as methyl alcohol, ethyl alcohol, isopropyl alcohol, normal propyl alcohol, tertiary butyl alcohol, and normal butyl alcohol; glycol ethers such as propylene glycol monomethyl ether, methyl cellosolve, ethyl cellosolve, ethylene glycol tertiary butyl ether, butyl cellosolve, 3-methoxy-3-methyl-1-butanol, ethylene glycol monopropyl ether, diethylene glycol monobutyl ether, triethylene glycol monobutyl ether, and dipropylene glycol monomethyl ether; and ethers such as 1,3-dioxolane and 1,4-dioxolane, and tetrahydrofuran.

As the solvent, one type alone or two or more types may be used in combination. Water is preferred as the solvent.

The proportion of water in the solvent is preferably 50% by mass or more, more preferably 70% by mass or more, even more preferably 90% by mass or more, particularly preferably 95% by mass or more, and most preferably 100% by mass (i.e., the binder composition is free of any solvent other than water).

### <Other Components>

The presently disclosed binder composition may comprise optional other components in addition to the components described above. Such optional components are not particularly limited as long as they do not affect the battery reaction and components known in the art, such as those described in WO2012/115096, can be used. As such other components, one type alone or two or more types may be used in combination at any desired ratio.

### <Method of Producing Binder Composition>

Methods of preparing the binder composition are not particularly limited. For example, when an adhesive polymer e.g., the composite polymer described above has been prepared in a reaction solvent containing water, the resulting composition containing the adhesive polymer and water may be directly used as the binder composition. Alternatively, other components as described above may be added to the resulting composition to produce the binder composition.

### (Slurry Composition for Secondary Battery Functional Layer)

The presently disclosed slurry composition is used in applications for forming a functional layer and can be prepared using the binder composition described above. The slurry composition comprises at least the adhesive polymer solvent described above, and optionally further comprise functional particles and other components.

Because the presently disclosed slurry composition is prepared using the binder composition described above, by drying the slurry composition for example on a substrate, a functional layer (electrode mixed material layer, porous membrane layer, or adhesive layer) can be formed which shows good adhesion to the substrate. With a battery member provided with such a functional layer, it is possible to allow a secondary battery to exert good cycle characteristics. Further, when the presently disclosed slurry composition is used, it is possible to manufacture an electrode comprising an electrode mixed material layer which is less likely to be separated during roll pressing, or a separator comprising a porous membrane layer and/or an adhesive layer, which has improved blocking resistance.

### <Binder Composition>

As the binder composition, the presently disclosed binder composition described above which comprises at least an adhesive polymer and a solvent can be used.

The amount of the binder composition used to prepare the slurry composition is not particularly limited. For example, when a slurry composition for an electrode is to be prepared using the presently disclosed binder composition, the proportion of the adhesive polymer in total solids of the slurry composition is preferably 0.2% by mass or more, and more preferably 0.5% by mass or more, but preferably 3.0% by mass or less, and more preferably 2.5% by mass or less. When the proportion of the adhesive polymer in total solids of the slurry composition is 0.5% by mass or more, it is possible to further increase the adhesion between the electrode mixed material layer and current collector, and when it is 3.0% by mass or less, it is possible to prevent increases in the internal resistance of a secondary battery while ensuring the capacity of the secondary battery.

### <Functional Particles >

Examples of functional particles for allowing the functional layer to exert a target function include electrode active material particles when the functional layer is an electrode mixed material layer, and non-electrically conductive particles when the functional layer is a porous membrane layer.

### <<Electrode Active Material Particles>>

Electrode active material particles are not particularly limited and examples thereof include particles made of known electrode active materials used in secondary batteries. Specifically, for example, electrode active material particles which can be used in an electrode mixed material layer of a lithium ion secondary battery as an example of a secondary battery are not particularly limited. For example, particles made of electrode active materials described below can be used.

### [Positive Electrode Active Material]

Examples of usable positive electrode active materials to be blended in a positive electrode mixed material layer of the positive electrode of a lithium ion secondary battery include transition metal-containing compounds, such as transition metal oxides, transition metal sulfides, and composite metal oxides of lithium and transition metals. Examples of transition metals include Ti, V, Cr, Mn, Fe, Co, Ni, Cu, and Mo.

Specifically, positive electrode active materials are not particularly limited and examples thereof include lithium-containing cobalt oxide (LiCoO₂), lithium manganate (LiMn₂O₄), lithium-containing nickel oxide (LiNiO₂), lithium-containing composite oxide of Co-Ni-Mn, lithium-containing composite oxide of Ni-Mn-Al, lithium-containing composite oxide of Ni-Co-Al, olivine-type lithium iron phosphate (LiFePO₄), olivine-type lithium manganese phosphate (LiMnPO₄), lithium-excess spinel compounds represented by Li₁₊ₓMn₂₋ₓO₄ (0<X<2), Li[Ni_{0.17}Li_{0.2}Co_{0.07}Mn_{0.56}]O₂, and LiNi_{0.5}Mn_{1.5}O₄.

As the positive electrode active material, one type alone or two or more types may be used in combination.

### [Negative Electrode Active Material]

Examples of negative electrode active materials to be blended in a negative electrode mixed material layer of the negative electrode of a lithium ion secondary battery include carbon-based negative electrode active materials, metal-based negative electrode active materials, and negative electrode active materials containing any combination thereof.

The carbon-based negative electrode active material herein refers to an active material having a carbon backbone, into which lithium can be intercalated (also referred to as "doped"). Specific examples of the carbon-based negative electrode active materials include carbonaceous materials such as coke, mesocarbon microbeads (MCMB), mesophase pitch-based carbon fibers, pyrolytic vapor-grown carbon fibers, sintered phenol resins, polyacrylonitrile-based carbon fibers, quasi-isotropic carbon, sintered furfuryl alcohol resins (PFA), and hard carbon; and graphitic materials such as natural graphite and synthetic graphite.

The metal-based negative electrode active material is an active material that contains metal, the structure of which usually contains an element that allows intercalation of lithium, and that exhibits a theoretical electric capacity per unit mass of 500 mAh/g or more when lithium is intercalated. Examples of metal-based active materials include lithium metal, elemental metals that can form a lithium alloy (e.g., Ag, Al, Ba, Bi, Cu, Ga, Ge, In, Ni, P, Pb, Sb, Si, Sn, Sr, Zn, Ti), and their oxides, sulfides, nitrides, silicides, carbides and phosphides. Also included are oxides such as lithium titanate.

As the negative electrode active material, one type alone or two or more types may be used in combination.

When a slurry composition for an electrode, for example, is to be prepared using the presently disclosed binder composition, the proportion of the electrode active material particles in total solids of the slurry composition is preferably 95% by mass or more, and more preferably 97% by mass or more, but preferably 99% by mass or less, and more preferably 98% by mass or less. When the proportion of the electrode active material particles in total solids of the slurry composition is 95% by mass or more, the capacity of a secondary battery can be ensured, and when it is 99% by mass or less, the electrode structure is retained, whereby cycle characteristics of a secondary battery can be further improved.

### <<Non-Electrically Conductive Particles>>

The non-electrically conductive particles to be blended into the porous membrane layer are not particularly limited and examples thereof include those known in the art which are used in secondary batteries.

Specifically, both inorganic and organic microparticles can be used as non-electrically conductive particles. However, inorganic microparticles are usually used. Preferred materials of non-electrically conductive particles are those which are stably present in the operating environment of a secondary battery and are electrochemically stable. Preferred examples of materials of non-electrically conductive particles from such a viewpoint include particles of aluminum oxide (alumina), hydrated aluminum oxide (boehmite), silicon oxide, magnesium oxide (magnesia), calcium oxide, titanium oxide (titania), BaTiO₃, ZrO, and alumina-silica complex oxide; particles of nitrides such as aluminum nitride and boron nitride; particles of covalent crystals such as silicon and diamond; particles of poorly soluble ionic crystals such as barium sulfate, calcium fluoride, and barium fluoride; and microparticles of clay such as talc and montmorillonite. These particles may be subjected to element replacement, surface treatment, solid solution treatment and/or the like where necessary.

As the non-electrically conductive particles, one type alone or two or more types may be used in combination.

### <Other Components>

Other components that may be blended in the slurry composition are not particularly limited and examples thereof include those described above that may be blended in the presently disclosed binder composition. As such other components, one type alone or two or more types may be used in combination at any desired ratio.

The slurry composition can comprise a semi-natural polymer as another component. Examples of semi-natural polymers include sodium, ammonium and lithium salts of carboxymethyl cellulose; methyl cellulose; hydroxyethyl cellulose; hydroxypropyl cellulose; and cellulose nanofiber. As the semi-natural polymer, one type alone or two or more types may be used in combination at any desired ratio. Semi-natural polymers such as a sodium salt of carboxymethyl cellulose are a component which functions as a thickener of the slurry composition. However, semi-natural polymers have been problematic because they leave an undissolved gel in the slurry composition and cause coating failure. In contrast, because the presently disclosed slurry composition is prepared using the binder composition which comprises the adhesive polymer etc. having a high ability of conferring viscosity, the presently disclosed slurry composition is also advantageous in that the amount of a semi-natural polymer such as a sodium salt of carboxymethyl cellulose may be reduced. Specifically, the ratio of the amount of the blended semi-natural polymer to the amount of the blended adhesive polymer in the slurry composition (amount of blended semi-natural polymer / amount of adhesive polymer) is preferably 1.70 or less, more preferably 1.50 or less, and even more preferably 1.00 or less, from the viewpoint of preventing increases in the viscosity of the slurry composition and/or preventing reductions in cycle characteristics of a secondary battery due to coating failure.

When a slurry composition for an electrode is to be prepared using the presently disclosed binder composition, the proportion of the semi-natural polymer in total solids of the slurry composition is preferably 0.2% by mass or more, and more preferably 0.5% by mass or more, but preferably 2.0% by mass or less, and more preferably 1.5% by mass or less. When the proportion of the semi-natural polymer in total solids of the slurry composition is 0.2% by mass or more, electrode active material particles can be favorably dispersed, and when it is 2.0% by mass or less, increases in the internal resistance of a secondary battery can be prevented while ensuring the capacity of the secondary battery.

### <Method of Preparing Slurry Composition>

Methods of preparing the slurry composition are not particularly limited.

For example, when the slurry composition is one for an electrode, the slurry composition can be prepared by mixing the binder composition, electrode active material particles and other optional components in the presence of a solvent.

In particular, when the slurry composition is one for a negative electrode, from the viewpoint of obtaining a negative electrode mixed material layer which shows good adhesion to a current collector, it is preferred to prepare the slurry composition by mixing negative electrode active material particles and a semi-natural polymer to prepare a mixture solution, and mixing the obtained mixture solution with the binder composition.

When the slurry composition is one for a porous membrane layer, the slurry composition can be prepared by mixing the binder composition, non-electrically conductive particles and optional other components in the presence of a solvent.

Finally, when the slurry composition is one for an adhesive layer, the binder composition can be used as it is or diluted with a solvent to prepare the slurry composition. Alternatively, the binder composition and optional other components can be mixed in the presence of a solvent to prepare the slurry composition.

Solvents used to prepare the slurry composition include those which have been contained in the binder composition. Mixing methods are not particular limited and mixing is effected using a stirrer or disperser which may be commonly used in the art.

### <Secondary Battery Member>

The presently disclosed battery member is a member comprising a functional layer on a substrate and specific examples thereof include electrodes and separators.

The functional layer is a layer responsible for such functions as transfer of electrodes, reinforcement or adhesion in a secondary battery. Examples of functional layers include electrode mixed material layers for transferring and receiving electrons via an electrochemical reaction, porous membrane layers for improving heat resistance and strength, and adhesive layers for improving adhesion. The functional layer included in the presently disclosed battery member is formed from the presently disclosed slurry composition described above and can be formed for example by applying the slurry composition onto a surface of an appropriate substrate to form a coating and drying the formed coating. That is, the functional layer included in the presently disclosed battery member is composed of a dried product of the slurry composition described above and usually contains at least the adhesive polymer. Because each component contained in the functional layer derives from the slurry composition, a suitable proportion of each component in the functional layer is the same as that of the corresponding component in the slurry composition.

The presently disclosed battery member may comprise a plurality of functional layers each formed from the presently disclosed slurry composition. For example, an electrode as the presently disclosed battery member comprises on a current collector an electrode mixed material layer formed from the presently disclosed slurry composition for an electrode and also may comprise on the electrode mixed material layer a porous membrane layer and/or an adhesive layer formed from the presently disclosed slurry composition for a porous membrane layer and/or the presently disclosed slurry composition for an adhesive layer. Further, for example, a separator as the presently disclosed battery member comprises on a separator substrate a porous membrane layer formed from the presently disclosed slurry composition for a porous membrane layer and also may comprise on the porous membrane layer an adhesive layer formed from the presently disclosed slurry composition for an adhesive layer.

In addition, the presently disclosed battery member may comprise a functional layer formed from the presently disclosed slurry composition and component(s) other than the substrate. Such components are not particularly limited and examples thereof include electrode mixed material layers, porous membrane layers, and adhesive layers, all of which do not fall under the definition of the functional layer described herein.

The presently disclosed battery member comprises a functional layer formed from the presently disclosed slurry composition prepared using the presently disclosed binder composition, and the functional layer may be firmly bonded to the substrate. Thus, the presently disclosed battery member allows a secondary battery which comprises the battery member to exert good battery characteristics (e.g., cycle characteristics).

### <<Substrate>>

As the substrate, a component of the battery member which is to be coated with the slurry composition, it is preferred to employ a current collector, a separator substrate, or an electrode substrate. Specifically, when an electrode mixed material layer is to be prepared, it is preferred to apply the slurry composition onto a current collector as the substrate. When a porous membrane layer or an adhesive layer is to be prepared, it is preferred to apply the slurry composition onto a separator substrate or an electrode substrate.

### [Current Collector]

Materials having electrical conductivity and electrochemical durability are used for the current collector. Specifically, the current collector may be made of, for example, iron, copper, aluminum, nickel, stainless steel, titanium, tantalum, gold, or platinum. Of these materials, copper foil is particularly preferred as the current collector used for a negative electrode. On the other hand, aluminum foil is particularly preferred as the current collector used for a positive electrode. As the material of the current collector, one type alone or two or more types may be used in combination at any desired ratio.

### [Separator Substrate]

The separator substrate is not specifically limited and examples thereof include separator substrates known in the art, such as organic separator substrates. The organic separator substrate is a porous member that is made of organic material. Examples of organic separator substrates include microporous membranes or non-woven fabrics containing, for example, a polyolefin resin such as polyethylene or polypropylene or an aromatic polyamide resin. Preferred are polyethene microporous membranes or non-woven fabrics for their good strength.

### [Electrode Substrate]

The electrode substrate (positive or negative electrode substrate) is not particularly limited and examples thereof include those in which an electrode mixed material layer containing electrode active material particles and a binder (adhesive polymer) is formed on a current collector. The electrode active material particles and binder to be included in the electrode mixed material layer of the electrode substrate are not particularly limited and those known in the art can be used. As the electrode mixed material layer in the electrode substrate, an electrode mixed material layer formed from a slurry composition prepared using the presently disclosed binder composition may be used.

### <Method of Manufacturing Battery Member>>

Examples of methods of manufacturing a battery member by forming a functional layer on a substrate such as the current collector, separator substrate or electrode substrate described above include the following methods:
1) applying the presently disclosed slurry composition onto the substrate surface (surface on the electrode mixed material layer side in the case of an electrode substrate; the same applies hereinafter) and drying the slurry composition; and
2) immersing the substrate with the presently disclosed slurry composition and drying the slurry composition.

The method (1) is particularly preferred because the thickness of the functional layer can be easily controlled. In detail, the method (1) includes applying the slurry composition onto a substrate (applying step) and drying the slurry composition applied onto substrate to form a functional layer (drying step).

### [Applying Step]

Methods of applying the slurry composition onto a substrate in the applying step are not particularly limited. Application can be accomplished for example by doctor blade coating, reverse roll coating, direct roll coating, gravure coating, extrusion coating, or brush coating.

### [Drying Step]

Methods of drying the slurry composition applied on the substrate in the drying step are not particularly limited and those known in the art can be used. Examples of drying methods include drying by warm, hot, or low-humidity air; drying in a vacuum; and drying through irradiation with infrared light, electron beams, or the like.

When an electrode mixed material layer as the functional layer is to be prepared, after the drying step, the electrode mixed material layer can be pressurized with a roll press to increase the density of the electrode mixed material layer. In an electrode as the presently disclosed battery member, the electrode mixed material layer is formed from a slurry composition prepared using the presently disclosed binder composition. It is therefore possible to prevent separation of the electrode mixed material layer during roll pressing.

### (Secondary Battery)

The presently disclosed secondary battery comprises the presently disclosed battery member described above. More specifically, the presently disclosed secondary battery comprises a positive electrode, a negative electrode, a separator, and an electrolyte solution, wherein at least one of the positive electrode, negative electrode and separator is the presently disclosed battery member described above. The presently disclosed secondary battery has good battery characteristics such as good cycle characteristics.

### <Positive Electrode, Negative Electrode, and Separator>

At least one of the positive electrode, negative electrode and separator used in the presently disclosed secondary battery is the presently disclosed battery member described above. The positive electrode, negative electrode and separator which are free of a functional layer formed from a slurry composition prepared using the presently disclosed binder composition are not particularly limited and those known in the art can be used.

### <Electrolyte Solution>

The electrolyte solution is usually an organic electrolyte solution obtained by dissolving a supporting electrolyte in an organic solvent. The supporting electrolyte may, for example, be a lithium salt in the case of a lithium ion secondary battery. Lithium salts may include, for example, LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO)NLi. Preferred are LiPF₆, LiClO₄, CF₃SO₃Li because they have a high degree of dissociation and are easy to dissolve in solvents. As the electrolyte, one type alone or two or more types may be used in combination. In general, lithium ion conductivity tends to increase when a supporting electrolyte having a high degree of dissociation is used. Therefore, lithium ion conductivity can be adjusted through the type of supporting electrolyte that is used.

Organic solvents for use in the electrolyte solution are not particularly limited as long as they can dissolve a supporting electrolyte. Suitably used in lithium ion secondary batteries are carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Mixed liquids of these solvents may also be used. Preferred are carbonates for their high permittivity and wider stable potential region. In general, lithium ion conductivity tends to increase when a solvent having a low viscosity is used. Therefore, lithium ion conductivity can be adjusted through the type of solvent used.

The concentration of the electrolyte in the electrolyte solution can be adjusted as appropriate. Known additives may be added to the electrolyte solution.

### <Method of Manufacturing Secondary Battery>

The presently disclosed secondary battery set forth above can be produced by, for example, stacking the positive electrode and the negative electrode with the separator interposed therebetween; placing the resultant stack in a battery container, optionally in a rolled or folded form; injecting the electrolyte solution into the battery container; and sealing the battery container. Note that the presently disclosed battery member is used as at least one of the positive electrode, negative electrode and separator. In order to prevent pressure increases inside the battery and occurrence of overcharging or overdischarging, an expanded metal; an overcurrent preventing device such as a fuse or a PTC device; or a lead plate may be provided in the battery container as necessary. The shape of the battery may be a coin type, button type, sheet type, cylinder type, prismatic type, flat type, or the like.

### EXAMPLES

The following provides a more specific description of the present disclosure based on Examples. However, the present disclosure is not limited to Examples given below. In the following description, "%" and "part" used in expressing quantities are by mass unless otherwise specified."

Moreover, in the case of a polymer that is produced through copolymerization of a plurality of types of monomers, the proportion constituted by a repeating unit (monomer unit) that is formed through polymerization of a given monomer in the polymer is normally, unless otherwise specified, the same as the ratio (charging ratio) of the given monomer among all monomers used in polymerization of the polymer.

In Examples and Comparative Examples, the weight-average molecular weight and radius of gyration in water of a water-soluble polymer; the surface acid amount and acid amount in aqueous phase of a polymer (adhesive polymer); the 5.0% by mass binder viscosity, post-centrifugation fraction viscosity and viscosity ratio of a binder composition; prevention of foaming and thickening of a slurry composition; adhesion between a negative electrode mixed material layer and a current collector; prevention of separation of a negative electrode mixed material layer during roll pressing; the blocking resistance of a separator; adhesion between a porous membrane layer and a separator substrate; and cycle characteristics of a secondary battery were measured or evaluated by the methods described below.

### <Weight-Average Molecular Weight of Water-Soluble Polymer>

The weight-average molecular weight of a water-soluble polymer was determined by gel permeation chromatography (GPC). First, the water-soluble polymer was added to about 5 mL of eluant to a solid concentration of the water-soluble polymer of about 0.5 g/L and was gently dissolved at room temperature. After visually confirming the dissolution of the water-soluble polymer, the solution was gently filtered through a 0.45 µm membrane filter to prepare a measurement sample. A calibration curve was then made using a standard substance. Using the calibration curve, the weight-average molecular weight in standard equivalent was calculated. The measurement conditions were as described below.

### <<Measurement Conditions>>

Columns: Shodex OHpak (SB-G, SB-807HQ, SB-806MHQ), manufactured by Showa Denko K.K.
Eluant: 0.1M Tris buffer (with 0.1M potassium chloride)
Flow rate: 0.5 mL/min
Sample Concentration: 0.05 g/L (solid concentration)
Injection volume: 200 mL
Column temperature: 40°C
Detector: differential refractive index detector RI (RI-8020, manufactured by Tosoh Corporation)
Standard substance: monodisperse pullulan (manufactured by Showa Denko K.K.)

### <Radius of Gyration in Water of Water-Soluble Polymer>

The radius of gyration in water of a water-soluble polymer was obtained by constructing a Zimm Plot by static light scattering using a field-flow fractionation (hereinafter "FFF") device coupled with a multi-angle light scattering (hereinafter "MALS") detector. The FFF device refers to a device in which a sample solution is passed through a gap (channel) of 100 µm to 500 µm in size so that a field can be applied when the sample solution passes through the channel.

50 µL of the measurement sample containing a water-soluble polymer was injected into the FFF device coupled to the MALS detector, and a static light scattering measurement was performed at a flow rate of 1.0 mL/min. The measurement conditions were as described below.

### <<Measurement Conditions>>

MALS detector: PN3621 MALS, manufactured by Postnova
FFF device: AF2000, manufactured by Postnova
RI detector: PN3150 RI, manufactured by Postnova
Channel: 10kDa polyethersulfone membrane
Developing solution: 1 mM phosphate buffer
Measurement sample: 100 µL of water-soluble polymer diluted to 1% with ion-exchanged water was diluted with 900 µL of 1 mM phosphate buffer (pH 7.4) to a solid concentration of 0.1% by mass

### <Surface Acid Amount and Acid Amount in Aqueous Phase of Polymer (Adhesive Polymer)>

Ion-exchanged water was added to an aqueous dispersion containing the obtained polymer (adhesive polymer) to a solid concentration of 3%. To a 150 ml glass container washed with distilled water were added 5 g of the aqueous dispersion with the adjusted solid concentration and 45 g of ion-exchanged water to prepare a measurement sample, which was loaded on a solution conductivity meter and stirred. Stirring was continued until the addition of hydrochloric acid described later was complete.

A 0.1N aqueous sodium hydroxide solution was added to the polymer-containing measurement sample such that the sample has an electrical conductivity of 2.5 to 3.0 mS and a pH of 11.5. The electrical conductivity was then measured after 5 minutes. The measured value was taken as the electrical conductivity at the start of measurement.

0.5 ml of 0.1N hydrochloric acid was further added to this measurement sample, and 30 seconds later, the electrical conductivity was measured. Subsequently, 0.5 mL of 0.1N hydrochloric acid was added again, and 30 seconds later, the electrical conductivity was measured. This procedure was repeated at intervals of 30 seconds until the electrical conductivity of the polymer-containing measurement sample was equal to or greater than the electrical conductivity at the start of measurement.

The obtained electrical conductivity data were plotted on a graph with electrical conductivity (unit: mS) on the vertical axis (y axis) and cumulative amount of added hydrochloric acid (unit: mmol) on the horizontal axis (x axis). This resulted in a hydrochloric acid amount/electrical conductivity curve with three inflection points as shown in FIG. 1. The X coordinates of the three inflection points and the X coordinate at the time of completion of hydrochloric acid addition were defined as P1, P2, P3, and P4, respectively, in ascending order of the values. Approximate straight lines L1, L2, L3, and L4 were obtained by the least square method for data in the four segments along the x axis: from zero to coordinate P1; from coordinate P1 to coordinate P2; from coordinate P2 to coordinate P3; and from coordinate P3 to coordinate P4. The X coordinate of the intersection point between approximate straight lines L1 and L2 was defined as A1 (mmol), the X coordinate of the intersection point between approximate straight lines L2 and L3 as A2 (mmol), and the X coordinate of the intersection point between approximate straight lines L3 and L4 as A3 (mmol).

The surface acid amount per gram of polymer and the acid amount in aqueous phase per gram of polymer were calculated as values in hydrochloric acid equivalent (mmol/g) using the formulas (a) and (b) given below, respectively. Note that the total acid amount per gram of polymer dispersed in water equals to the sum of the values obtained from the formulas (a) and (b) as represented by the formula (c) given below.
(a) Surface acid amount per gram of polymer = A2 - A1
(b) Acid amount in aqueous phase per gram of polymer = A3 - A2
(c) Total acid amount per gram of polymer dispersed in water = A3 - A1

### <5.0% by Mass Binder Viscosity of Binder Composition>

### <<Sample Preparation>>

In the present disclosure, a sample for measuring the 5.0% by mass binder viscosity was prepared in the procedure described below.

First, the solid concentration of the binder compositions is measured. The solid concentration of the binder composition can be measured in accordance with JIS K 6387-2:2011. When the solid concentration of the binder composition is 5.0% by mass, the binder composition is directly used as a sample. In the other cases, a sample is prepared by adjusting the solid concentration of the binder composition by known methods which do not negatively affect the adhesive polymer and other solids, e.g., by thermal denaturation. For example, when the solid concentration of the binder composition is more than 5.0% by mass, the solid concentration is adjusted to 5.0% by adding a solvent (e.g., ion-exchanged water) similar to that contained in the binder composition to prepare a sample.

### <<Measurement of Viscosity>>

The viscosity of the viscosity measurement sample prepared as described having a solid concentration of 5.0% was measured using a B-type viscometer under the following condition: temperature = 25°C, spindle rotation time = 60 seconds, spindle rotation speed = 60 rpm.

### <Post-Centrifugation Viscosity of Binder Composition>

### <<Sample Preparation>>

Sample having a solid concentration of 5.0% is prepared in the same manner as for "5.0% by mass binder viscosity" described above.

### <<Centrifugation>>

The sample obtained as described above is centrifugated using a centrifuge. When the sample has been separated into a supernatant fraction and a precipitate fraction by centrifugation, both the supernatant fraction and the precipitate fraction are subject to measurements of transmittance described later. If the sample does not separate into a supernatant fraction and a precipitate fraction even by centrifugation under excessive conditions (e.g., at 150,000 rpm for 6 hours), the sample subjected to centrifugation under such excessive conditions is subjected to measurements of transmittance.

The rotation speed and time of centrifugation for separating the sample into a supernatant fraction and a precipitate fraction are determined such that the dimension along the centrifugation sample tube length of both of the supernatant fraction and the precipitate fraction meets the condition 0.3×A to 0.7×A (cm), where A is the distance (cm) from the bottom of the sample tube to the liquid surface.

In Examples and Comparative Examples herein, centrifugation was carried out under the following conditions:
Centrifuge: CS150NX, manufactured by Hitachi Koki Co., Ltd.
Rotation speed of centrifugation: 110,000 rpm
Centrifugation time: 3 min

### <<Measurement of Transmittance >>

After centrifugation described above, light transmittance at 500 nm wavelength of the supernatant fraction and the precipitate fraction is measured. In Examples and Comparative Examples, transmittance was measured under the condition described below.

From the centrifuged sample tube, the supernatant fraction or precipitate fraction was taken with a Pasteur pipette into a quartz cell with an optical length of 1 cm and the light transmittance was measured on a spectrophotometer (U-5100, manufactured by Hitachi High-Tech Science Corporation). Measurement was made at 500 nm wavelength with ion-exchanged water as a control.

### <<Measurement of Viscosity>>

The viscosity of the fraction having a light transmittance of 65% or less was measured using a B-type viscometer under the following condition: temperature = 25°C, spindle rotation time = 60 seconds, spindle rotation speed = 60 rpm.

### <Viscosity Ratio (η6/η60) of Binder Composition >

The viscosity η6 at a rotation speed of 6 rpm of the prepared binder composition was measured using a B-type viscometer under the following condition: temperature = 25°C, spindle rotation speed = 6 rpm. The viscosity η60 at a rotation speed of 60 rpm of the binder composition was then measured using a B-type viscometer under the following condition: temperature = 25°C, spindle rotation speed = 60 rpm. Using the measured values, the viscosity ratio η6/η60 was calculated.

### <Prevention of Foaming of Slurry Composition>

100 g of the prepared slurry composition was placed in a container having an inner diameter of 6 cm. The slurry composition in the container was mixed for 5 minutes at 2,000 rpm with a disper blade fitted with a 3 cm-diameter serrated disc-turbine vane. The slurry composition was then placed in a pressure-resistant case, the internal pressure of the case was set to 0.1 MPa with nitrogen gas, and the slurry composition was retained in the case for 3 minutes. After removing the slurry composition, a 20-fold loupe was used to count the numbers of gas bubbles with diameters of 0.1 mm or more present at the liquid surface of the slurry composition, and prevention of foaming was evaluated based on the criteria given below. The smaller the number of gas bubbles, the more the foaming of the slurry composition is prevented.
A: Number of gas bubbles is 0 or 1.
B: Number of gas bubbles is 2 to 5
C: Number of gas bubbles is 6 to 9
D: Number of gas bubbles is 10 or more

### <Prevention of Thickening of Slurry Composition>

### <Slurry Compositions for Negative Electrode (Examples 1 to 18, Comparative Examples 1 to 2>>

A mixture solution containing artificial graphite as negative electrode active material particles and a sodium salt of carboxymethyl cellulose (hereinafter also simply "CMC"; degree of etherification: 1.0, viscosity of aqueous solution at 1.0% by mass solid concentration: 2,000 mPa·s) was prepared in a planetary mixer fitted with a disper blade in the same manner as in Examples and Comparative Examples. The viscosity ηA of the mixture solution was measured using a B-type viscometer under the following condition: temperature = 25°C, spindle rotation speed = 60 rpm, spindle rotation time = 60 seconds.

To the mixture solution was added 1.5 parts, in terms of solids, of a binder composition for a secondary battery and mixed for 10 minutes. After mixing, the obtained mixture was subjected to defoaming treatment under reduced pressure to afford a slurry composition for a secondary battery negative electrode. The viscosity ηB of the slurry composition was measured in the same manner as for the viscosity ηA. Then, the value obtained by dividing the viscosity ηB after addition of the binder composition by the viscosity ηA prior to addition of the binder composition (ηB/ηA) was evaluated based on the criteria given below. The closer the value of ηB/ηA to 1.0, the more increases in the viscosity of the slurry composition due to the addition of the binder composition are prevented, indicating that the slurry composition is easy to handle.
A: ηB/ηA is less than 1.1
B: ηB/ηA is 1.1 to less than 1.2
C: ηB/ηA is 1.2 to less than 1.3
D: ηB/ηA is 1.3 or more

### <Slurry Composition for Porous Membrane Layer (Example 19)>>

A mixture solution containing aluminum oxide (alumina) as non-electrically conductive particles and ammonium polycarboxylate was prepared as in Example 19 in a media-less disperser, and the viscosity ηC of the mixture solution was measured after 60 seconds at a rotation speed of 60 rpm using an E-type viscometer.

To the mixture solution was added 3.0 parts, in terms of solids, of a binder composition for a secondary battery and mixed for 10 minutes. After mixing, the obtained mixture was subjected to defoaming treatment under reduced pressure to afford a slurry composition for a secondary battery porous membrane layer. The viscosity ηD of the slurry composition was measured in the same manner as for the viscosity ηC. Then, the value obtained by dividing the viscosity ηD after addition of the binder composition by the viscosity ηC prior to addition of the binder composition (ηD/ηC) was evaluated based on the criteria given below. The closer the value of ηD/ηC to 1.0, the more increases in the viscosity of the slurry composition due to the addition of the binder composition are prevented, indicating that the slurry composition is easy to handle.
A: ηD/ηC is less than 1.1
B: ηD/ηC is 1.1 to less than 1.2
C: ηD/ηC is 1.2 to less than 1.3
D: ηD/ηC is 1.3 or more

### <Adhesion between Negative Electrode Mixed Material Layer and Current Collector>

A fabricated negative electrode was cut into a 1 cm × 10 cm rectangle to prepare a specimen. The specimen was fixed with the negative electrode mixed material layer side facing up. An adhesive cellophane tape was attached to the surface of the negative electrode mixed material layer of the fixed specimen and a stress at the time when the adhesive cellophane tape was peeled from one end of the specimen at a rate of 50 mm/min in the direction of 180° was measured. The same measurement was made 5 times and an average value of the 5 measurements was recorded as the negative electrode's peel strength and evaluated based on the criteria given below. The larger the peel strength, the more firmly the negative electrode mixed material layer is bonded to the current collector.
A: Negative electrode's peel strength is 5 N/m or more
B: Negative electrode's peel strength is 4 N/m to less than 5 N/m
C: Negative electrode's peel strength is 3 N/m to less than 4 N/m
D: Negative electrode's peel strength is less than 3 N/m

### <Prevention of Separation of Negative Electrode Mixed Material Layer during Roll Pressing>

A prepared slurry composition for a negative electrode was applied onto copper foil as a current collector to prepare a test negative electrode (coating amount: 13 mg/cm², coating width: 6 cm, copper foil width: 8 cm, electrode length: 30 cm). The test negative electrode was roll-pressed at a load of 30 t and a roll rotation speed of 30 m/min. The negative electrode's mass W1 (g) prior to roll pressing and the negative electrode's mass W2 (g) after roll pressing were measured, and the mass of the negative electrode mixed material layer separated from the current collector (W3 (g) = W1 - W2) was calculated. Prevention of separation of the negative electrode mixed material layer during roll pressing was evaluated based on the criteria given below. The smaller the mass W3 of the separated negative-electrode mixed material layer, the more the separation of the negative-electrode mixed material layer is prevented.
A: Mass W3 of separated negative electrode mixed material layer is less than 0.001 g
B: Mass W3 of separated negative electrode mixed material layer is 0.001 g to less than 0.01 g
C: Mass W3 of separated negative electrode mixed material layer is 0.01 g to less than 0.5 g
D: Mass W3 of separated negative electrode mixed material layer is 0.5 g or more

### <Blocking Resistance of Separator>

A separator with a porous membrane layer and a separator without a porous membrane (i.e. a separator substrate) were each cut into a 5 cm × 5 cm square piece. The two square pieces of separator were placed on top of each other with the porous membrane layer placed in between the separators, and placed under a pressure of 10 g/cm² at 40°C to prepare a measurement sample. The sample was allowed to stand for 24 hours. After 24 hours, one of the separators was pulled up with a force of 0.3 N/m with the other separator being entirely fixed to see whether the separators can be separated from each other, and the adhesion state (blocking state) was evaluated based on the criteria given below. The lesser the adhesion observed, the better the blocking resistance.
A: Separators placed on top of each other are not bonded to each other
B: Separators placed on top of each other can be separated from each other
C: Separators placed on top of each other are bonded to each other and cannot be separated from each other

### <Adhesion between Porous Membrane Layer and Separator Substrate>

A rectangular specimen with a length of 100 mm and a width of 10 mm was cut out from a prepared separator with a porous membrane layer. An adhesive cellophane tape was previously fixed to a test stage. The adhesive cellophane tape specified in JIS Z1522 was used.

The specimen cut out from the separator was attached to the adhesive cellophane tape with the porous membrane layer facing down. Subsequently, a stress at the time when the separator was peeled by pulling up one end in the vertical direction at a pulling rate of 100 mm/min was measured. Measurement was made three times and an average value of the three measurements was recorded as the separator's peel strength and evaluated based on the criteria given below. The larger the separator's peel strength, the more firmly the porous membrane layer is bonded to the separator substrate.
A: Separator's peel strength is 100 N/m or more
B: Separator's peel strength is 80 N/m to less than 100 N/m
C: Separator's peel strength is less than 80 N/m

### <Secondary Battery Cycle Characteristics>

A laminate cell-type lithium ion secondary battery was allowed to stand for 24 hours in an environment of 25°C after injection of electrolyte solution. The secondary battery was charged to a cell voltage of 4.25V and then discharged to a cell voltage of 3.0V by the constant current method at 0.1C rate, and initial capacity C was measured. Further, in an environment of 60°C, a charging/discharging cycle in which the secondary battery is charged to a cell voltage of 4.25V and discharged to a cell voltage of 3.0V by the constant current method at 0.1C rate was repeated, and capacity C2 after 100 cycles was measured. %Capacity retention C3 was calculated using the equation (C2/C0) × 100 and evaluated based on the criteria given below. The higher the value of C3, the better the cycle characteristics of the secondary battery.
A: Capacity retention C3 is 95% or more
B: Capacity retention C3 is 90% to less than 95%
C: Capacity retention C3 is 80% to less than 90%
D: Capacity retention C3 is less than 80%

### (Example 1)

### <Preparation of Binder Composition for Secondary Battery>

789 parts of ion-exchanged water was charged into a 5 MPa pressure-resistant vessel A fitted with a stirrer and heated to a temperature of 40°C. The vessel was purged with nitrogen gas at a flow rate of 100 mL/min for 60 minutes. Note that purging of the vessel with nitrogen gas was continued until 1 hour after the start of the polymerization reaction for synthesizing a water-soluble polymer described later. 25 parts of acrylic acid as an acidic group-containing monomer, 68 parts of acrylamide as an amide group-containing monomer, and 7 parts of hydroxyethyl acrylate as a hydroxyl group-containing monomer (all of which are monomers used to form a water-soluble polymer) were mixed and injected into the vessel A. 8.9 parts of 2.5% aqueous solution of potassium persulfate as a polymerization initiator was then added into the vessel A with a syringe. 22.2 parts of 2.0% aqueous solution of tetramethylethylenediamine as a polymerization accelerator was added with a syringe 15 minutes after the addition of potassium persulfate to initiate a polymerization reaction for forming a water-soluble polymer.

On the other hand, 43 parts of ion-exchanged water and 0.35 parts of sodium lauryl sulfate as emulsifier were added into a 5 MPa pressure-resistant vessel B fitted with a stirrer and stirred. 62 parts of styrene as an aromatic vinyl monomer, 36 parts of 1,3-butadiene as an aliphatic conjugated diene monomer, and 1 part of methacrylic acid and 1 part of hydroxyethyl acrylate as other monomers (all of which are monomers used to form a particulate polymer), and 0.25 parts of tert-dodecyl mercaptan as a chain transfer agent were added into the vessel B. Further, the internal temperature of the vessel B was adjusted to 25°C and the mixture was mixed for 30 minutes.

After 60 minutes from the start of the polymerization reaction in the vessel A, 1.0 g of the reaction mass was taken from the vessel A, and the weight-average molecular weight and the radius of gyration in water of the water-soluble polymer were measured. The results are shown in Table 1. After raising the internal temperature of the vessel A to 70°C and completely sealing the vessel A, the mixture in the vessel B was added into the vessel A over 180 minutes. After completion of addition of the mixture contained in the vessel B, the internal temperature of the vessel A was raised to 85°C. A polymerization reaction was carried out for 5 hours and the reaction was stopped once the polymerization conversion rate reached 98%. A 5% sodium hydroxide aqueous solution was added into the resulting polymer-containing mixture to adjust the pH to 8. Thereafter, unreacted monomers were removed by distillation under heating and reduced pressure. By additional cooling, a binder composition was obtained which contains water and a composite polymer (adhesive polymer) in which a water-soluble polymer and styrene-butadiene polymer 1 (particulate polymer) are bound to each other. The obtained binder composition was used to evaluate the surface acid amount and acid amount in aqueous phase of the adhesive polymer, the 5.0% by mass binder viscosity of the binder composition, the post-centrifugation fraction viscosity of the binder composition, the viscosity ratio of the binder composition, and prevention of increases in the viscosity of a slurry composition. The results are shown in Table 1.

Upon measurement of the post-centrifugation fraction viscosity of the binder composition, the precipitate fraction obtained after centrifugation had a light transmittance of 65% or less at 500 nm wavelength and the viscosity of the precipitate fraction was measured (the same applies to Examples 2 to 19).

### <Preparation of Slurry Composition for Secondary Battery Negative Electrode>

To a planetary mixer fitted with a disper blade were added 97.7 parts of artificial graphite (specific surface area: 4 m²/g, volume-average particle diameter: 24.5 µm) as negative electrode active material particles and 0.8 parts, in terms of solids, of CMC (degree of etherification: 1.0, viscosity of aqueous solution at 1.0% by mass solid concentration: 2,000 mPa·s), the solid concentration was adjusted to 55% with ion-exchanged water, and the mixture was mixed at room temperature for 60 minutes. Next, the mixture was adjusted to a solid concentration of 50% with ion-exchanged water and further mixed for 15 minutes to afford a mixture solution. To this mixture solution was added 1.5 parts, in terms of solids (adhesive polymer), of the binder composition obtained as described above and mixed for 10 minutes. After mixing, the mixture was subjected to defoaming treatment under reduced pressure to afford a slurry composition for a secondary battery negative electrode. Using the slurry composition, prevention of foaming of the slurry composition and prevention of separation of the negative electrode mixed material layer during roll pressing were evaluated. The results are shown in Table 1.

### <Manufacture of Secondary Battery Negative Electrode>

The slurry composition for a secondary battery negative electrode obtained as described above was applied onto a copper foil (current collector) of 18 µm thickness with a comma coater so as to have a post-drying film thickness of about 150 µm. The copper foil coated with the slurry composition was conveyed through an oven at 75°C over 2 minutes and further through an oven at 120°C over 2 minutes at a speed of 0.5 m/min to dry the slurry composition on the copper foil to form a negative electrode web. The negative electrode web was rolled with a roll press to manufacture a negative electrode having a negative electrode mixed material layer of 80 µm thickness. The negative electrode was used to evaluate adhesion between the negative electrode mixed material layer and the current collector. The results are shown in Table 1.

### <Manufacture of Secondary Battery Positive Electrode>

95 parts of LiCoO₂ as positive electrode active material particles, 3 parts, in terms of solids, of polyvinylidene fluoride (PVDF) as a binder for a positive electrode mixed material layer, 2 parts of acetylene black as an electrically conductive material, and 20 parts of N-methylpyrrolidone as a solvent were added into a planetary mixer and mixed to afford a slurry composition for a secondary battery positive electrode.

The slurry composition for a secondary battery positive electrode obtained as described above was applied onto an aluminum foil (current collector) of 20 µm thickness with a comma coater so as to have a post-drying film thickness of about 100 µm. The aluminum foil coated with the slurry composition was conveyed through an oven at 60°C over 2 minutes and further through an oven at 120°C over 2 minutes at a speed of 0.5 m/min to dry the slurry composition on the aluminum foil to form a positive electrode web. The positive electrode web was rolled with a roll press to manufacture a positive electrode having a positive electrode mixed material layer of 70 µm thickness.

### <Preparation of Separator>

A single-layer polypropylene separator (500 mm long, 65 mm wide, 25 µm thick; manufactured by dry process; 55% porosity) was provided and cut into a 5 cm × 5 cm square for use in the manufacture of a secondary battery.

### <Manufacture of Secondary Battery>

An aluminum packing case was prepared as a battery case. The positive electrode obtained as described above was cut out into a 4 cm × 4 cm square and placed so that the surface on the current collector side contacts the aluminum packaging case. Next, the square separator obtained as described above was placed on the surface of the positive electrode mixed material layer of the positive electrode. The negative electrode obtained as described above was cut out into a 4.2 cm × 4.2 cm square and placed on the separator so that the surface on the negative electrode mixed material layer side faces the separator. Subsequently, as an electrolyte solution, 1.0M LiPF₆ in a 1:2 (by mass) mixed solvent of ethylene carbonate (EC) and diethyl carbonate (DEC) with 2% by volume (with respect to solvent) vinylene carbonate as additive was loaded. The aluminum packaging case was sealed by heat-sealing the opening at 150°C. In this way a laminate cell-type lithium ion secondary battery was manufactured. The secondary battery was evaluated for cycle characteristics. The results are shown in Table 1.

### (Examples 2, 3, 7 to 11, and 13 to 15)

Binder compositions for a secondary battery, slurry compositions for a secondary battery negative electrode, positive and negative electrodes for a secondary battery, and secondary batteries were produced and various evaluations were made as in Example 1 except that the monomers used to form the water-soluble polymer when preparing the binder composition were changed as shown in Table 1 (Examples 2, 3 and 7-11) or Table 2 (Examples 13 to 15). The results are shown in Tables 1 and 2.

It should be noted in Examples 13 and 14 that the weight-average molecular weight and the radius of gyration in water of the water-soluble polymer constituting the adhesive polymer, a composite polymer, are low compared to those in Example 1. This appears to be because the growing reaction of the water-soluble polymer was prevented due to the use of methacrylamide (Example 13) or methacrylic acid (Example 14).

### (Example 4)

A binder composition for a secondary battery, a slurry composition for a secondary battery negative electrode, positive and negative electrodes for a secondary battery, and a secondary battery were produced and various evaluations were made as in Example 1 except that, upon preparation of the binder composition, the amount of ion-exchanged water charged into the vessel A was changed from 789 parts to 389 parts to adjust the growing reaction of molecular chains (water-soluble polymer) to thereby adjust the weight-average molecular weight and the radius of gyration in water of the resulting water-soluble polymer. The results are shown in Table 1.

### (Example 5)

A binder composition for a secondary battery, a slurry composition for a secondary battery negative electrode, positive and negative electrodes for a secondary battery, and a secondary battery were produced and various evaluations were made as in Example 1 except that, upon preparation of the binder composition, 2.5 parts of isopropyl alcohol was added to the vessel A simultaneously with the monomers used to form the water-soluble polymer, to adjust the growing reaction of molecular chains (water-soluble polymer) to thereby adjust the weight-average molecular weight and the radius of gyration in water of the resulting water-soluble polymer. The results are shown in Table 1.

### (Example 6)

A binder composition for a secondary battery (containing a composite polymer in which a water-soluble polymer and styrene-butadiene polymer 2 as a particulate polymer are bound to each other), a slurry composition for a secondary battery negative electrode, positive and negative electrodes for a secondary battery, and a secondary battery were produced and various evaluations were made as in Example 1 except that, upon preparation of the binder composition, for the monomers used to form the particulate polymer, the amount of styrene was changed from 62 parts to 124 parts, the amount of 1,3-butadiene from 36 parts to 72 parts, the amount of methacrylic acid from 1 part to 2 parts, and the amount of 2-hydroxyethyl acrylate from 1 part to 2 parts. The results are shown in Table 1.

### (Example 12)

A binder composition for a secondary battery, a slurry composition for a secondary battery negative electrode, positive and negative electrodes for a secondary battery, and a secondary battery were produced and various evaluations were made as in Example 1 except that, upon preparation of the slurry composition, the amount of artificial graphite as negative electrode active material particles was changed from 97.7 parts to 97.4 parts and the amount of solids of CMC was changed from 0.8 parts to 1.1 parts. The results are shown in Table 2.

### (Example 16)

A binder composition for a secondary battery (containing a composite polymer in which a water-soluble polymer and an acrylic polymer as a particulate polymer are bound to each other), a slurry composition for a secondary battery negative electrode, positive and negative electrodes for a secondary battery, and a secondary battery were produced and various evaluations were made as in Example 1 except that, upon preparation of the binder composition, as the monomers used to form the particulate polymer, 40 parts of methyl methacrylate, 58.5 parts of n-butyl acrylate, 0.5 parts of allyl methacrylate, and 1 part of methacrylic acid were used. The results are shown in Table 2.

### (Example 17)

A binder composition for a secondary battery (containing a composite polymer in which a water-soluble polymer and polybutadiene as a particulate polymer are bound to each other), a slurry composition for a secondary battery negative electrode, positive and negative electrodes for a secondary battery, and a secondary battery were produced and various evaluations were made as in Example 1 except that, upon preparation of the binder composition, as the monomer used to form the particulate polymer, 100 parts of 1,3-butadiene was used and the reaction time after adding the mixture contained in the vessel B into the vessel A was changed from 5 hours to 20 hours. The results are shown in Table 2.

### (Example 18)

A slurry composition for a secondary battery negative electrode, positive and negative electrodes for a secondary battery, and a secondary battery were produced and various evaluations were made as in Example 1 except that the binder composition (containing a composite polymer in which a water-soluble polymer and a styrene-isoprene-styrene block copolymer are bound to each other) prepared as described below was used. The results are shown in Table 2.

### <Preparation of Binder Composition for Secondary Battery>

789 parts of ion-exchanged water was charged into a 5 MPa pressure-resistant vessel A fitted with a stirrer and heated to a temperature of 40°C. The vessel was purged with nitrogen gas at a flow rate of 100 mL/min for 60 minutes. Note that purging of the vessel with nitrogen gas was continued until 1 hour after the start of the polymerization reaction for synthesizing a water-soluble polymer described later. 25 parts of acrylic acid as an acidic group-containing monomer, 68 parts of acrylamide as an amide group-containing monomer, and 7 parts of hydroxyethyl acrylate as a hydroxyl group-containing monomer (all of which are monomers used to form a water-soluble polymer) were mixed and injected into the vessel A. 8.9 parts of 2.5% aqueous solution of potassium persulfate as a polymerization initiator was then added into the vessel A with a syringe. 22.2 parts of 2.0% aqueous solution of tetramethylethylenediamine as a polymerization accelerator was added with a syringe 15 minutes after the addition of potassium persulfate to initiate a polymerization reaction for forming a water-soluble polymer.

On the other hand, 233.3 parts of cyclohexane, 60.0 µmol of N,N,N',N'-tetramethylethylenediamine and 24.0 parts of styrene were added into a 5 MPa pressure-resistant vessel B fitted with a stirrer and stirred at 40°C, during which 2,000.0 µmol of n-butyllithium was added to effect polymerization for 1 hour while raising the temperature of 50°C. Subsequently, 76.0 parts of isoprene was continuously added to the vessel over 1 hour while keeping the temperature at 55°C. After completion of the addition of isoprene, polymerization as continued for an additional 1 hour.

After raising the internal temperature of the vessel A to 70°C and completely sealing the vessel A, the mixture in the vessel B was added into the vessel A over 180 minutes. After completion of addition of the mixture contained in the vessel B, the internal temperature of the vessel A was raised to 85°C and a polymerization reaction was carried out for an additional 2 hours. At the time when the polymerization conversion rate reached 98%, 820.0 mmol of dichlorodimethylsilane as a coupling agent was added and a coupling reaction was carried out for 2 hours to form a styrene-isoprene coupling block copolymer. Thereafter, 4,000.0 µmol of methanol was added and mixed well to deactivate the active terminal to stop the reaction. 5% sodium hydroxide aqueous solution was added into the resulting polymer-containing mixture to adjust the pH to 8. In the manner described above, a binder composition was obtained which contains water and a composite polymer (adhesive polymer) in which a water-soluble polymer and a styrene-isoprene-styrene block copolymer as a particulate polymer are bound to each other.

### (Example 19)

### <Preparation of Binder Composition for Secondary Battery>

In the same manner as in Example 1, a binder composition was obtained which contains water and a composite polymer (adhesive polymer) in which a water-soluble polymer and the styrene-butadiene polymer 1 as a particulate polymer are bound to each other, and various evaluations were made. The results are shown in Table 2.

### <Preparation of Slurry Composition for Secondary Battery Porous Membrane Layer>

100 parts of aluminum oxide (alumina) (volume-average particle diameter: 0.5 µm) as non-electrically conductive particles, 1.0 part of ammonium polycarboxylate (Aron A-6114, Toagosei Co., Ltd.) as a dispersant, and water were mixed. The amount of water was adjusted such that the mixture has a solid concentration of 50%. The obtained mixture was processed using a media-less disperser to disperse aluminum oxide (alumina) to afford a dispersion liquid. To the obtained dispersion liquid, 2.0 parts of a sodium salt of carboxymethyl cellulose (degree of etherification: 1.0, viscosity of aqueous solution at 1.0% by mass solid concentration: 500 mPa·s) was added and mixed. The added sodium salt of carboxymethyl cellulose dissolved in the mixture. To the mixture were added 3.0 parts, in terms of solids (adhesive polymer), of the binder composition obtained as described above and 0.2 parts of an aliphatic polyether nonionic surfactant as a wetting agent. Water was further added so that the obtained mixture olution has a solid concentration of 40% to afford a slurry composition for a secondary battery porous membrane layer. The slurry composition was used to evaluate prevention of foaming of the slurry composition. The results are shown in Table 1.

### <Manufacture of Separator with Porous Membrane Layer>

A single-layer polypropylene separator substrate (1,000 mm long, 250 mm wide, 12 µm thick) manufactured by dry process was provided. The slurry composition prepared above was re-dispersed and applied on both sides of the separator substrate with a gravure coater (coating rate: 20 m/min) so as to have a post-drying film thickness of 2.5 µm on each side. The separator substrate coated with the slurry composition was dried in a drying furnace at 50°C and rolled up to manufacture a separator having a porous membrane layer on both sides of the separator substrate. The separator was cut out into a 5 cm × 5 cm square for use in the manufacture of a secondary battery.

The blocking resistance of the separator and the adhesion between the porous membrane and the separator substrate were evaluated. The results are shown in Table 2.

### <Manufacture of Secondary Battery Negative Electrode>

To a planetary mixer fitted with a disper blade were added 97.7 parts of artificial graphite (specific surface area: 4 m²/g, volume-average particle diameter: 24.5 µm) as negative electrode active material particles and 0.8 parts, in terms of solids, of CMC (degree of etherification: 1.0, viscosity of aqueous solution at 1.0% by mass solid concentration: 2,000 mPa·s), the solid concentration was adjusted to 55% with ion-exchanged water, and the mixture was mixed at room temperature for 60 minutes. Next, the mixture was adjusted to a solid concentration of 50% with ion-exchanged water and further mixed for 15 minutes to afford a mixture solution. To this mixture solution was added 1.5 parts, in terms of solids, of a binder composition (aqueous dispersion of styrene-butadiene polymer 1) obtained in the same manner as in Comparative Example 2 described below and mixed for 10 minutes. After mixing, the mixture was subjected to defoaming treatment under reduced pressure to afford a slurry composition for a secondary battery negative electrode.

A negative electrode having a negative electrode mixed material layer of 80 µm thickness was obtained as in Example 1 except that the slurry composition for a secondary battery negative electrode obtained as described above was used.

### <Manufacture of Secondary Battery Positive Electrode>

In the same manner as in Example 1, a positive electrode having a positive electrode mixed material layer of 70 µm thickness was obtained.

### <Manufacture of Secondary Battery>

A lithium ion secondary battery was manufactured as in Example 1 except that the separator with porous membrane layers obtained as described above was used as a separator. The secondary battery was evaluated for cycle characteristics. The results are shown in Table 2.

### (Comparative Example 1)

A slurry composition for a secondary battery negative electrode, positive and negative electrodes for a secondary battery, and a secondary battery were produced and various evaluations were made as in Example 1 except that the binder composition for a secondary battery (in which a water-soluble polymer and a particulate polymer are not bound to each other and exist independently) prepared as described below was used. The results are shown in Table 1.

### <Preparation of Binder Composition for Secondary Battery>

### «Preparation of Water-Soluble Polymer»

789 parts of ion-exchanged water was charged into a 5 MPa pressure-resistant vessel A fitted with a stirrer and heated to a temperature of 40°C. The vessel was purged with nitrogen gas at a flow rate of 100 mL/min for 60 minutes. Note that purging of the vessel with nitrogen gas was continued until 1 hour after the start of the polymerization reaction for synthesizing a water-soluble polymer described later. 25 parts of acrylic acid as an acidic group-containing monomer, 68 parts of acrylamide as an amide group-containing monomer, and 7 parts of hydroxyethyl acrylate as a hydroxyl group-containing monomer (all of which are monomers used to form a water-soluble polymer) were mixed and injected into the vessel A. 8.9 parts of 2.5% aqueous solution of potassium persulfate as a polymerization initiator was then added into the vessel A with a syringe. 22.2 parts of 2.0% aqueous solution of tetramethylethylenediamine as a polymerization accelerator was added with a syringe 15 minutes after the addition of potassium persulfate to initiate a polymerization reaction for forming a water-soluble polymer. The reaction was stop by cooling after 60 minutes from the start of the polymerization reaction in the vessel A to afford an aqueous solution of a water-soluble polymer.

### «Preparation of Particulate Polymer»

To a 5 MPa pressure-resistant vessel B fitted with a stirrer were added 43 parts of ion-exchanged water and 0.35 parts of sodium lauryl sulfate as emulsifier and stirred. 62 parts of styrene as an aromatic vinyl monomer, 36 parts of 1,3-butadiene as an aliphatic conjugated diene monomer, 1 part of methacrylic acid and 1 part of hydroxyethyl acrylate as other monomers, and 0.25 parts of tert-dodecyl mercaptan as a chain transfer agent were added. The mixture was further mixed for 30 minutes with the internal temperature of the vessel B set at 25°C.

25 parts of ion-exchanged water was placed in another vessel C and the inside of the vessel C was completely sealed. The mixture in the vessel B was added into the vessel C over 180 minutes. Simultaneously with the start of the addition, 10 parts of a 2.5% potassium persulfate aqueous solution as a polymerization initiator was added to the vessel C. After completion of the addition of the mixture of the vessel B, the internal temperature of the vessel C was raised to 85°C and the mixture was allowed to react for 5 hours. Once the polymerization conversion rate reached 98%, the reaction was stopped by cooling to afford an aqueous dispersion of a particulate polymer (styrene-butadiene polymer 1).

### <Mixing of Water-Soluble Polymer and Particulate Polymer>

The water-soluble polymer aqueous solution and the particulate polymer aqueous dispersion described above were adjusted to pH 8 by the addition of 5% sodium hydroxide aqueous solution, and unreacted monomers were then removed by distillation under heating and reduced pressure.

The aqueous solution and aqueous dispersion were cooled and mixed at a water-soluble polymer-to-particulate polymer ratio (by solid) of 1:1 to prepare a binder composition for a secondary battery. In Comparative Example 1, as an aqueous dispersion containing a polymer (adhesive polymer), this binder composition was used to measure the surface acid amount and acid amount in the aqueous phase.

Upon measurement of the post-centrifugation fraction viscosity of the binder composition, the precipitate fraction obtained after centrifugation had a light transmittance of 65% or less at 500 nm wavelength and the viscosity of the precipitate fraction was measured. The measured viscosity of the precipitated fraction was 15 mPa·s, a value lower than that of Example 1. This appears to be because the particulate polymer and the water-soluble polymer are not bound to each other and separately present in the binder composition, so that the particulate polymer having a lower ability of conferring viscosity was separated in the precipitated fraction and the water-soluble polymer was separated into the supernatant fraction.

### (Comparative Example 2)

A slurry composition for a secondary battery negative electrode, positive and negative electrodes for a secondary battery, and a secondary battery were produced and various evaluations were made as in Example 1 except that the binder composition for a secondary battery (containing a particulate polymer) prepared as described below was used. The results are shown in Table 1.

### <Preparation of Binder Composition for Secondary Battery>

To a 5 MPa pressure-resistant vessel B fitted with a stirrer were added 43 parts of ion-exchanged water and 0.35 parts of sodium lauryl sulfate as emulsifier and stirred. 62 parts of styrene as an aromatic vinyl monomer, 36 parts of 1,3-butadiene as an aliphatic conjugated diene monomer, 1 part of methacrylic acid and 1 part of hydroxyethyl acrylate as other monomers, and 0.25 parts of tert-dodecyl mercaptan as a chain transfer agent were added. The mixture was further mixed for 30 minutes with the internal temperature of the vessel B set at 25°C.

25 parts of ion-exchanged water was placed in another vessel C and the inside of the vessel C was completely sealed. The mixture contained in the vessel B was added into the vessel C over 180 minutes. Simultaneously with the start of the addition, 10 parts of 2.5% potassium persulfate aqueous solution as a polymerization initiator was added to the vessel C. After completion of the addition of the mixture of the vessel B, the internal temperature of the vessel C was raised to 85°C and the mixture was allowed to react for an additional 5 hours. Once the polymerization conversion rate reached 98%, the reaction was stopped by cooling to afford an aqueous dispersion of a particulate polymer (styrene-butadiene polymer 1).

The particulate polymer described above was adjusted to pH 8 by the addition of a 5% sodium hydroxide aqueous solution, and unreacted monomers were removed by distillation under heating and reduced pressure to afford a binder composition for a secondary battery.

Upon measurement of the post-centrifugation fraction viscosity of the binder composition, the precipitate fraction obtained after centrifugation had a light transmittance of 65% or less at 500 nm wavelength and the viscosity of the precipitate fraction was measured.

In Table 1,
"AAm" represents acrylamide,
"MAAm" represents methacrylamide,
"AA" represents acrylic acid,
"MAA" represents methacrylic acid,
"HEA" represents hydroxyethyl acrylate,
"BA" represents n-butyl acrylate,
"MEA" represents methoxyethyl acrylate,
"SBR1" represents styrene-butadiene polymer 1,
"SBR2" represents styrene-butadiene polymer 2,
"ACR" represents acrylic polymer,
"PBD" represents polybutadiene,
"SIS" represents styrene-isoprene-styrene block copolymer,
"CMC" represents sodium salt of carboxymethyl cellulose, and
"APC" represents ammonium polycarboxylate.

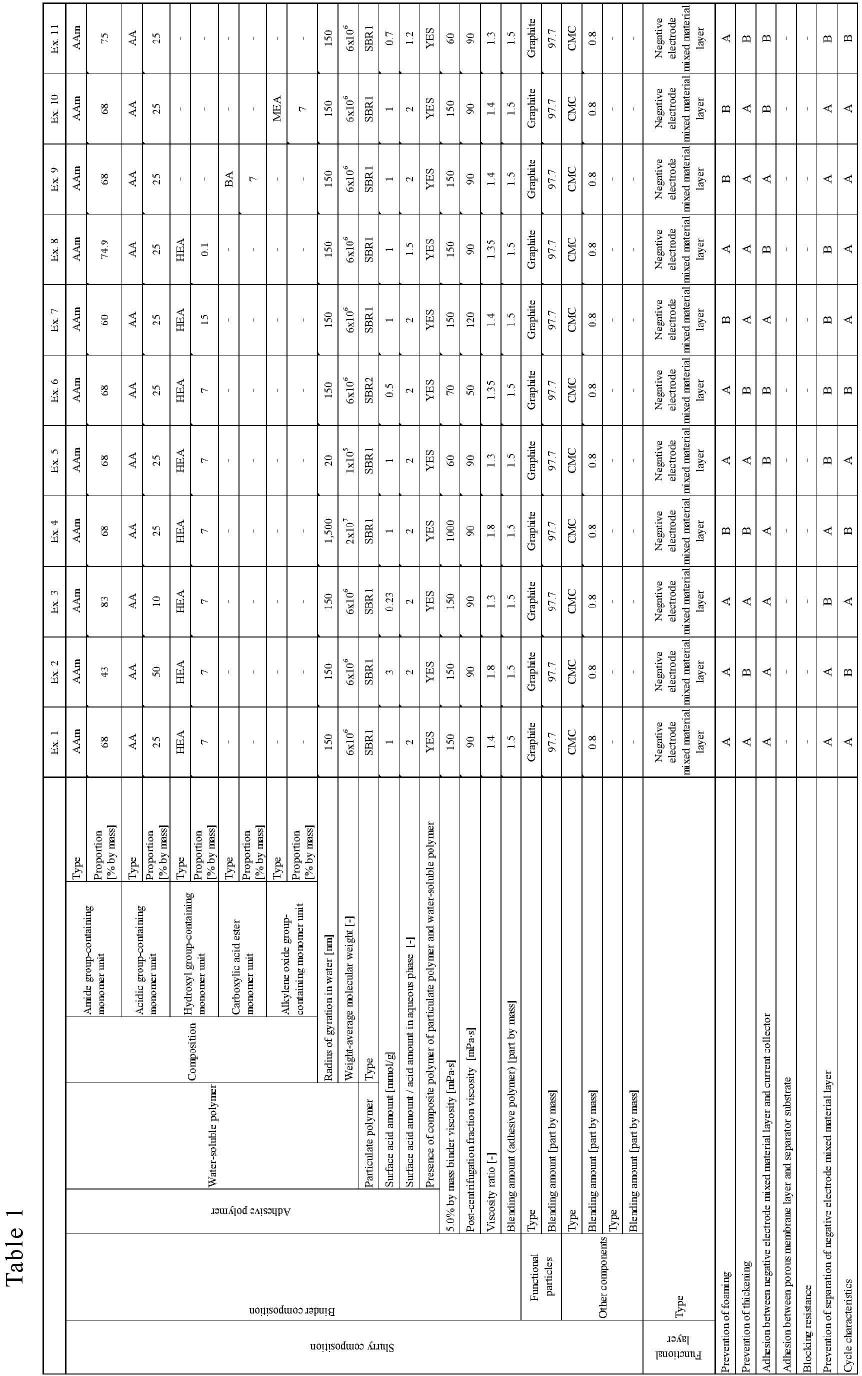

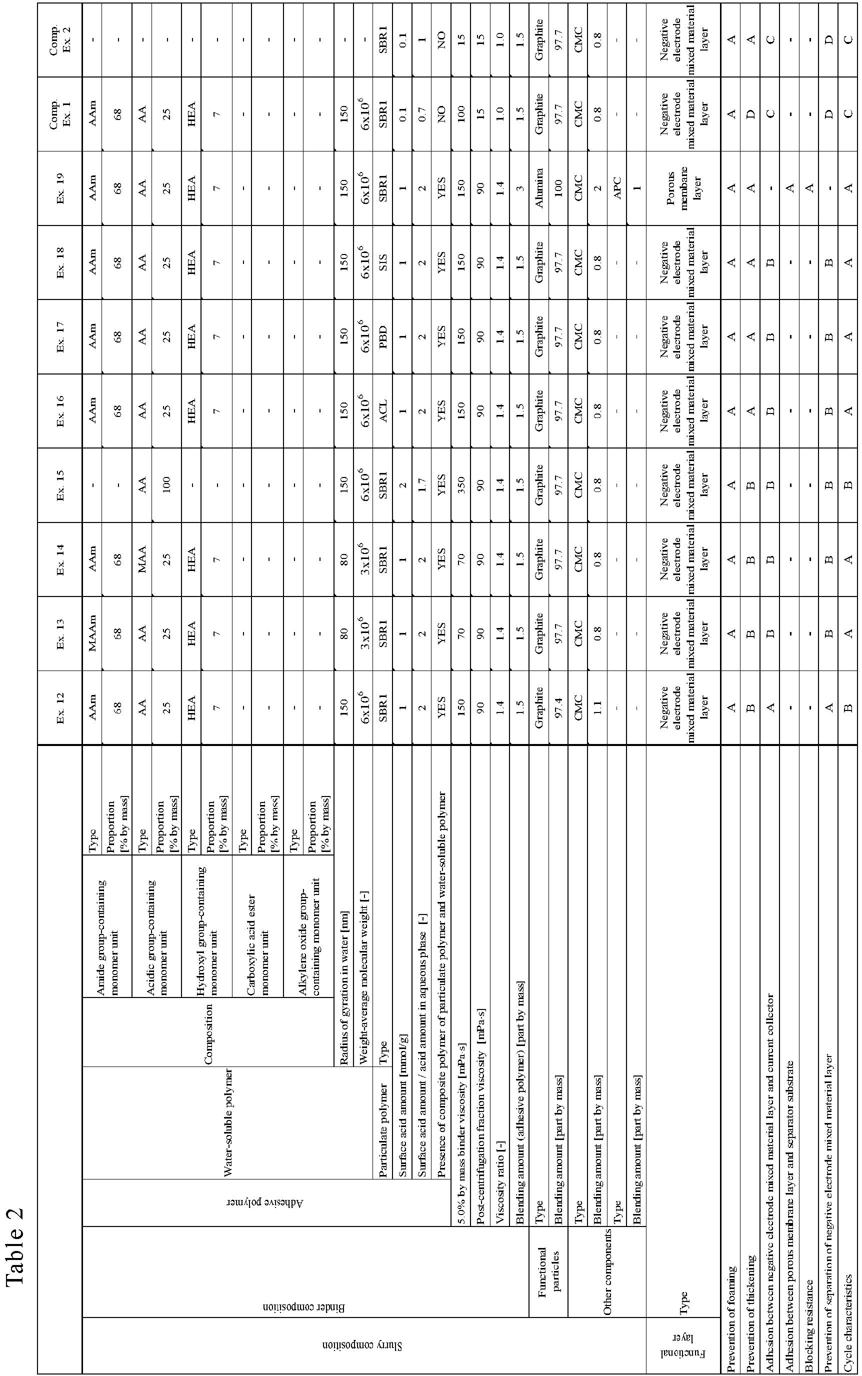

It can be seen from Tables 1 and 2 that in Examples 1-19 in which a binder composition whose 5.0% by mass binder viscosity and post-centrifugation fractional viscosity are both equal to or greater than the respective specific values was used to form a functional layer, the functional layer (negative electrode mixed material layer or porous membrane layer) was favorably bonded to the substrate (current collector or separator substrate) and may allow the secondary battery to exert good cycle characteristics. It can also be seen that Examples 1 to 19 succeeded in preventing foaming and thickening of a slurry composition. Further, it can be seen that in Examples 1 to 18 in which the binder composition is used to form a negative electrode mixed material layer, separation of the negative electrode mixed material layer during roll pressing was prevented, and that in Example 19 in which the binder composition is used to form a porous membrane layer, the blocking resistance of a separator comprising the porous membrane was ensured.

It can be seen that in Comparative Example 1 in which the post-centrifugation fractional viscosity is less than the specific value, the functional layer (negative electrode mixed material layer) was unable to be favorably bonded to the substrate (current collector) and failed to allow the secondary battery to exert good cycle characteristics. Further, it can be seen that, in Comparative Example 1, the slurry composition was undesirably thickened and prevention of separation of the negative electrode mixed material layer was failed.

In addition, it can be seen that in Comparative Example 2 in which both of the 5.0% by mass binder viscosity and the post-centrifugation fraction viscosity are less than the respective specific values, the functional layer (negative electrode mixed material layer) was unable to be favorably bonded to the substrate (current collector) and failed to allow the secondary battery to exert good cycle characteristics. Further, it can be seen that, in Comparative Example 2, prevention of separation of the negative electrode mixed material layer during roll pressing was failed.

### INDUSTRIAL APPLICABILITY

According to the present disclosure, it is possible to provide a binder composition for a secondary battery and a slurry composition for a secondary battery functional layer, which allow for the formation of a functional layer which shows good adhesion to substrates.

According to the present disclosure, it is also possible to provide a secondary battery member in which a functional layer and a substrate are favorably bonded to each other, and a secondary battery which comprises the secondary battery member.

## Claims

1. A binder composition for a secondary battery, comprising an adhesive polymer and a solvent,
wherein a viscosity of the binder composition at a solid concentration of 5.0% by mass is 50 mPa·s or more, and
a viscosity of a fraction which is obtained by centrifuging the binder composition at a solid concentration of 5.0% by mass and has a light transmittance of 65% or less is 30 mPa·s or more.

2. The binder composition for a secondary battery according to claim 1, wherein the adhesive polymer is a composite polymer in which a water-soluble polymer and a particulate polymer are bound to each other.

3. The binder composition for a secondary battery according to claim 2, wherein the water-soluble polymer comprises 5% by mass or more of an acidic group-containing monomer unit.

4. The binder composition for a secondary battery according to claim 2 or 3, wherein the water-soluble polymer has a radius of gyration in water of 10 nm or more and 2,000 nm or less.

5. The binder composition for a secondary battery according to any one of claims 2 to 4, wherein the water-soluble polymer has a weight-average molecular weight of 5.0×10⁴ or more and 3.0×10⁷ or less.

6. The binder composition for a secondary battery according to any one of claims 2 to 5, wherein the water-soluble polymer comprises at least one monomer unit selected from the group consisting of an amide group-containing monomer unit, a hydroxyl group-containing monomer unit, a carboxylic acid ester monomer unit, and an alkylene oxide group-containing monomer unit.

7. The binder composition for a secondary battery according to any one of claims 1 to 6, wherein the adhesive polymer has a surface acid amount of 0.20 mmol/g or more, and a value obtained by dividing the surface acid amount of the adhesive polymer by an acid amount in aqueous phase of the adhesive polymer is 1.0 or more.

8. A slurry composition for a secondary battery functional layer, comprising the binder composition for a secondary battery according to any one of claims 1 to 7.

9. The slurry composition for a secondary battery functional layer according to claim 8, further comprising non-electrically conductive particles.

10. The slurry composition for a secondary battery functional layer according to claim 8, further comprising electrode active material particles.

11. A secondary battery member comprising:
a secondary battery functional layer formed using the slurry composition for a secondary battery functional layer according to any one of claims 8 to 10; and
a substrate.

12. A secondary battery comprising the secondary battery member according to claim 11.

13. A method of producing a slurry composition for a secondary battery negative electrode, comprising:
mixing negative electrode active material particles with a semi-natural polymer to prepare a mixture solution; and
mixing the mixture solution with the binder composition for a secondary battery according to any one of claims 1 to 7 to afford a slurry composition for a secondary battery negative electrode.
